# EUROPÄISCHE PATENTSCHRIFT

(11) **EP 4 313 520 B1**
(45) Veröffentlichungstag und Bekanntmachung des Hinweises auf die Patenterteilung: **30.04.2025**
(21) Anmeldenummer: 22715516.5
(22) Anmeldetag: 25.03.2022
(51) Int. Cl.: B25J 15/06, B25J 15/00, B25J 19/00, F16M 11/04

(54) **GREIFVORRICHTUNG MIT VERSTELLBAREN SCHLITTEN**
GRIPPING DEVICE HAVING MOVABLE SLIDES
DISPOSITIF DE PRÉHENSION À COULISSEAU RÉGLABLE

(30) Priorität: 26.03.2021 AT 502152021
(43) Veröffentlichungstag der Anmeldung: 07.02.2024
(73) Patentinhaber: TRUMPF Maschinen Austria GmbH & Co. KG., 4061 Pasching (AT)
(72) Erfinder: ANGERER, Gerhard, 4203 Altenberg (AT); SCHERNHAMMER, Michael, 4060 Leonding (AT); FREUDENTHALER, Klemens, 4020 Linz (AT); MAIER, Florian, 4060 Leonding (AT); KOVJENIC, Nenad, 4020 Linz (AT); HAUSMANN, Florian, 4050 Traun (AT); STEININGER, Verena, 4020 Linz (AT)
(74) Vertreter: Burger, Hannes
(86) Internationale Anmeldenummer: PCT/AT2022/060093
(87) Internationale Veröffentlichungsnummer: WO 2022/198256

(56) Entgegenhaltungen:
- EP-A1- 2 401 118
- EP-A1- 3 031 586
- EP-B1- 2 401 118
- WO-A1-2011/059167
- WO-A1-2016/069731
- WO-A1-2019/166097
- CN-A- 105 742 224
- DE-B3- 102013 105 383
- US-A- 4 228 993

## Beschreibung

Die Erfindung betrifft eine verstellbare Greifvorrichtung, sowie einen Manipulator mit einer verstellbaren Greifvorrichtung.

Aus dem Stand der Technik sind der Fachwelt verstellbare bzw. justierbare Greifvorrichtungen bekannt, welche eine Positionsanpassung von Haltemitteln, insbesondere von unterdruckbetätigten Haltemitteln, ermöglichen sollen. Durch die Positionsanpassung der Haltemitteln soll ein Manipulieren verschiedengroßer Werkstücke ermöglicht werden. Dazu ist beispielsweise aus der EP 3031586 A1 ist eine einstellbare Greifvorrichtung bekannt geworden. Hierbei sind stationäre Arme mit Führungsschienen mit mehreren entlang der Führungsschienen verfahrbaren Querarmen vorgesehen, wobei an den verschiebbaren Querarmen verschiebbare Haltemittel angeordnet sind. Die EP 1041295 B1 offenbart eine Tragvorrichtung mit profilierten Stangen, welche Stangen über verschiebbare Klemmstücke miteinander lösbar verbunden sind. Die EP 1871696 B1, welche auf die Anmelderin zurückgeht, zeigt eine Greifvorrichtung für einen Manipulator mit mehreren um eine Achse drehbaren Tragarmen. Die Tragarme umfassen einen Basisarm und einen Kragarm, an welchen jeweils Haltemittel positioniert sind. Die US 6796588 B2 offenbart eine Saugvorrichtung mit teleskopartigen Evakuierungsrohren, umfassend einen Ausleger und mehrere Gleitstücke, welche entlang des Auslegers beweglich sind.

Die im Stand der Technik bekannten Ausführungen sind jedoch nur wenig kompakt aufgebaut gebaut, nicht ausreichend flexibel, und zudem nicht oder nicht ausreichend an verschiedene Werkstück-Geometrien anpassbar. Darüber hinaus sind die bekannten Lösungen baulich aufwendig und auch wenig stabil bzw. wenig robust und damit für ein Handling schwerer Bauteile weitgehend ungeeignet oder sind durch eine kurze Lebensdauer gekennzeichnet.

Aufgabe der vorliegenden Erfindung war es, Mittel zur Verfügung zu stellen, mittels derer Werkstücke, insbesondere plattenförmige Werkstücke oder Blechbauteile, verschiedener Größe und Form mit einer einzigen flexibel, einfach und präzise einstellbaren Greifvorrichtung manipuliert werden können. Die Greifvorrichtung soll dabei sowohl robust und stabil ausgeführt sein, als auch baulich wenig aufwendig, kompakt, langlebig und sicher in der Handhabung sein.

Diese Aufgabe wird durch eine verstellbare Greifvorrichtung, sowie durch einen Manipulator gemäß den Ansprüchen gelöst.

Die Erfindung betrifft eine Greifvorrichtung, welche dazu ausgebildet ist, ein zu transportierendes, bevorzugt plattenförmiges, Werkstück aufzunehmen und wieder abzugeben. Die Greifvorrichtung umfasst dazu eine Trageplattform mit einer Unterseite und einer der Unterseite gegenüberliegenden Oberseite. Die Trageplattform ist an ihrer Oberseite mit einer Verbindungsschnittstelle ausgebildet, welche zur Koppelung der Greifvorrichtung mit einem Manipulator ausgebildet ist. Die Trageplattform ist zudem an ihrer Unterseite mit zumindest zwei Einstellschlitten-Führungen ausgebildet.

Die Greifvorrichtung umfasst zudem eine Mehrzahl an Haltemitteln zum Halten des Werkstücks. Die Haltemittel sind mit der Trageplattform gekoppelt, wobei eine Koppelung direkt oder indirekt erfolgen kann. Die Koppelung kann darüber hinaus bevorzugt lösbar, besonders bevorzugt werkzeuglos lösbar, erfolgen. Die Haltemittel weisen jeweils Kontaktseiten auf, welche Kontaktseiten von der Unterseite der Trageplattform abgewandt sind und welche eine gemeinsame Kontaktebene aufspannen. Dem Fachmann sind verschiedene Arten von Haltemitteln geläufig, weshalb auf diese hier nicht im Detail eingegangen wird. So kann es sich bei den Haltemitteln beispielsweise um saugnapfähnliche Unterdruck-betätigbare Haltemittel handeln. Alternativ sind auch magnetisch wirkende Haltemittel denkbar, wobei sowohl druckbetätigbare Permanentmagneten, als auch Haltemittel mit Elektromagneten zum Einsatz kommen können.

Die Greifvorrichtung umfasst auch Versorgungsmittel, welche zum Aktivieren und Deaktivieren der Haltemittel ausgebildet sind. Je nach Art und Funktionsmechanismus der Haltemittel kann es sich bei den Versorgungsmitteln beispielsweise um Komponenten einer Unterdruck-Versorgung (wie beispielsweise ein Aggregat, flexible Unterdruck-Schlauchleitungen, starre Unterdruck-Rohrleitungen, Ventile, Ventilabsperrungen, Ventilinseln etc.) handeln, oder um Komponenten einer Strom-Versorgung (wie beispielsweise ein Aggregat, elektrische Leitungen, etc.) handeln.

Des Weiteren umfasst die Greifvorrichtung zumindest zwei verschiebbare Einstellschlitten. Diese Einstellschlitten sind jeweils zumindest teilweise in zumindest einer der Einstellschlitten-Führungen der trageplattform aufgenommen oder gehaltert. Darüber hinaus sind die Einstellschlitten in diesen Einstellschlitten-Führungen relativ zur Trageplattform entlang einer ersten Richtung verschiebbar. Die erste Richtung wird nachfolgend auch als X-Richtung bezeichnet. Zumindest einer der Einstellschlitten ist mit zumindest einer Quer-Führung ausgebildet. Die Greifvorrichtung umfasst auch zumindest einen Querschlitten, an welchem zumindest eines der Haltemittel angeordnet ist. Der Querschlitten ist zumindest teilweise in der Quer-Führung aufgenommen oder gehaltert, und ist in der Quer-Führung relativ zum Einstellschlitten entlang einer zweiten Richtung verschiebbar. Die zweite Richtung wird nachfolgend auch als Y-Richtung bezeichnet. Die erste Richtung und die zweite Richtung sind zueinander orthogonal. Bevorzugt verlaufen die erste und die zweite Richtung parallel zur Kontaktebene, wobei die Kontaktebene parallel zur X-Y-Ebene verlaufen kann.

Erfindungsgemäß ist vorgesehen, dass ein in der zumindest einen Quer-Führung aufgenommener oder gehalterter Führungsabschnitt des zumindest einen Querschlittens profilförmig ist, insbesondere hohlprofilförmig ist. Dieser Führungsabschnitt ist dabei in der Quer-Führung linear ausziehbar, respektive auch wieder linear einschiebbar.

Der profilförmige Führungsabschnitt des zumindest einen Querschlittens kann beispielsweise kreisrund, rechteckig oder auch oval sein. Grundsätzlich kann gegebenenfalls auch ein Schwalbenschwanz-förmiger Querschnitt zweckmäßig sein.

Die Haltemittel können, wie bereits erwähnt, sowohl an der oder den Quer-Führungen positioniert sein, aber zusätzlich auch auf den Einstellschlitten, sowie auch direkt an der Trageplattform positioniert sein. Grundsätzlich liegt die tatsächliche Positionierung und auch Größe und Anzahl der Haltemittel im Ermessen des Fachmanns. Dabei zeichnen sich insbesondere die an den ausschiebbaren Querschlitten positionierten Haltemittel durch eine Verschiebbarkeit in zwei Dimensionen, also in X- und Y-Richtung aus. Bevorzugt können einzelne Haftmittel bedarfsweise einzeln und unabhängig voneinander aktiviert und deaktiviert werden. Dazu kann beispielsweise in einer Versorgungsleitung des jeweiligen Haltemittels ein manuell oder auch automatisch betätigbares Sperrventil vorgesehen sein.

Die zumindest zwei Einstellschlitten und der zumindest eine Querschlitten kann manuell von einem Bediener verschiebbar sein. Alternativ ist aber auch eine automatische, insbesondere pneumatische oder auch elektrische, Verschiebbarkeit bzw. Einstellbarkeit der Schlitten denkbar. Verschiebe- und Einstellparameter können einem Bediener bevorzugt mittels eines softwarebasierten Rüstplanes bereitgestellt werden. Bevorzugt können sowohl die Einstellschlitten-Führung und auch die zumindest eine Quer-Führung als Linearführung ausgebildet sein. Eine solche Konstruktion ist sowohl kostengünstig herstellbar, als auch einfach in der Bedienung, und büßt aufgrund der Verschiebbarkeit der Haltemittel in zwei Richtungen dennoch keine Bewegungsfreiheit ein.

Die erfindungsgemäß ausgebildete Greifvorrichtung ist im Vergleich zu bekannten Konstruktionen sowohl baulich einfach und damit kostengünstig, als auch robust und damit langlebig und wenig reparaturintensiv. Darüber hinaus ist die Greifvorrichtung besonders kompakt zusammenschiebbar und der Abstand zwischen den einzelnen Haltemitteln damit überaus gering einstellbar. Dies insbesondere dann, wenn die zumindest eine linear ausziehbare Quer-Führung vollständig eingeschoben ist. Eine solche Einstellung kann insbesondere bei sehr kleinen Werkstücken oder auch bei abgewinkelten bzw. gekanteten Werkstücken vorteilhaft sein. Auf der anderen Seite ermöglicht die Ausschiebbarkeit des zumindest einen Querschlittens, dass die Haltemittel auch weit voneinander distanzierbar sind. Insbesondere kann durch die flexible Verschieb- und Einstellbarkeit auch eine Gefahr von Kollisionen mit dem Manipulator, aber auch mit peripheren Objekten verhindert oder zumindest weitgehend hintangehalten werden.

Das Verschieben der Schlitten entlang der Führungen ist einfach durchführbar und erfordert keinen großen Zeitaufwand. So kann die Greifvorrichtung, respektive können die an der Greifvorrichtung positionierten Haltemittel flexibel an die jeweilige Geometrie des zu manipulierenden Werkstückes angepasst werden. Mit nur einer einzigen, aber dafür flexibel einstellbaren Greifvorrichtung kann eine Vielzahl an Werkstück-Dimensionen manipuliert werden. Weil die Einstellbarkeit besonders einfach ist und somit auch von weniger gut geschultem Rüstpersonal erfolgen kann, können die Rüstzeiten erheblich verkürzt werden. Insbesondere bei einer geringen Stückzahl an die manipulierenden Werkstücken kann dies positive wirtschaftliche Auswirkungen haben.

Des Weiteren kann es zweckmäßig sein, wenn zumindest einer der Einstellschlitten mit zwei zueinander parallelen Quer-Führungen ausgebildet ist, und wenn in jeder Quer-Führung ein ausziehbarer Querschlitten aufgenommen oder gehaltert ist, wobei an jedem Querschlitten zumindest eines der Haltemittel angeordnet ist. Die Haltemittel sind dabei an einander abgewandten Endabschnitten der beiden Querschlitten ausgebildet. Beim Ausziehen beider Querschlitten werden die jeweiligen Haltemittel nicht nur weiter vom Einstellschlitten distanziert, sondern auch die Distanz zwischen den beiden Haltemitteln vergrößert. So kann auf einfache Art und Weise ein größtmöglicher Ausschubabstand realisiert werden. Die beiden Querschlitten stellen so eine beidseitige Verlängerungsmöglichkeit des Einstellschlittens entlang der zweiten Richtung dar, wodurch eine noch flexiblere Justierbarkeit gegeben ist. Wenn die Haltemittel an den Endabschnitten der jeweiligen Querschlitten angeordnet sind, kann damit im eingeschobenen Zustand eine kleinstmögliche Auskragung realisiert werden und im vollständig ausgezogenen Zustand eine größtmögliche Auskragung realisiert werden.

Indem die Haltemittel an einander abgewandten Endabschnitten der beiden Querschlitten ausgebildet sind, bzw. indem die Haltemittel bei Betrachtung der Unterseite der Tragvorrichtung außen angeordnet sind, ergibt die von den Saugern aufgespannte Fläche keine zusätzliche Störkontur. Das kann vorteilhaft sein, um die Greifvorrichtung nahe an eine Maschine, insbesondere an ein Biegewerkzeug einer Biegemaschine, heranbewegen zu können. So kann es sein, dass bei beispielsweise schachtelförmigen Bauteilen, bei welchen die Grundfläche nicht über kleinstmögliche Greifereinstellung hinausragt, kein Nachsetzen erforderlich ist.

Zudem kann auch die Höhe der Greifvorrichtung derart gestaltet sein, dass ein möglichst nahes Heranbewegen auch in einen engen Bereich, beispielsweise über einer Werkzeuglade, möglich sein kann. Dies kann auch dadurch ermöglicht oder begünstigt werden, indem die Haltemittel mittels L-förmiger bzw. gewinkelter Verbindungsmittel mit einem Querschlitten oder auch mit einem Einstellschlitten gekoppelt sind.

Gemäß einer vorteilhaften Weiterbildung kann vorgesehen sein, dass äquidistant zwischen den zwei zueinander parallelen Quer-Führungen eine entlang der ersten Richtung orientierte Querachse liegt. Die an den beiden Querschlitten angeordneten Haltemittel sind dabei derart positioniert, dass die Haltemittel mit ihrem jeweiligen Haltemittel-Mittelpunkt auf der Querachse liegen. Mit anderen Worten sind die einander gegenüberliegenden Haltemittel gemäß dieser Weiterbildung einander bei Betrachtung der Unterseite der Trageplattform derart zugeneigt, dass deren Haltemittel-Mittelpunkte auf der Querachse liegen. Somit sind die Haltemittel, bei Betrachtung der Greifvorrichtung in Richtung deren Unterseite, relativ zum jeweiligen Führungsabschnitt versetzt positioniert. Damit kann eine Genauigkeit der Einstellbarkeit zusätzlich verbessert werden, weil ein etwaiger Versatz- oder Offset-Fehler, bedingt durch die parallele Anordnung der zwei Quer-Führungen bzw. der zwei Querschlitten, ausgeglichen werden kann.

Darüber hinaus kann vorgesehen sein, dass die Einstellschlitten mit jeweils einer Einstellschlitten-Fixiereinrichtung ausgebildet sind. Diese Einstellschlitten-Fixiereinrichtungen sind unabhängig voneinander betätigbar, und zur bedarfsweise lösbaren Fixierung der Einstellschlitten gegenüber der Trageplattform ausgebildet. Alternativ oder zusätzlich kann es auch vorteilhaft sein, wenn die Einstellschlitten mit jeweils zumindest einer Querschlitten-Fixiereinrichtung ausgebildet sind. Diese Querschlitten-Fixiereinrichtung ist zur bedarfsweise lösbaren Fixierung des zumindest einen Querschlittens gegenüber dem Einstellschlitten ausgebildet. Bevorzugt können die Fixiereinrichtungen manuell oder zumindest mit geringem Werkzeugeinsatz betätigbar sein. Diese Weiterbildung hat einen die Sicherheit zusätzlich erhöhenden Effekt, weil eine zuverlässige Fixierbarkeit der Schlitten gegenüber unbeabsichtigtem Verschieben oder Verstellen ein etwaiges Verletzungsrisiko für Personen, aber auch ein Schadensrisiko an peripheren Objekten oder den Werkstücken erheblich reduzieren kann. Dies insbesondere bei schweren Werkstücken oder Werkstücken mit dezentralem Schwerpunkt, oder auch bei Greifvorrichtungen, welche mittels eines Manipulators frei im Raum bewegt und gedreht werden können.

Vorteilhaft ist auch eine Ausprägung, gemäß welcher vorgesehen sein kann, dass an der Trageplattform entlang der ersten Richtung zumindest eine erste Skale ausgebildet ist. An der Trageplattform können gegebenenfalls auch mehrere erste Skalen vorgesehen sein. Alternativ oder zusätzlich kann es auch vorteilhaft sein, wenn am zumindest einen Querschlitten, insbesondere an dessen Führungsabschnitt, entlang der zweiten Richtung eine zweite Skale ausgebildet ist. Mit Hilfe der Skalenmarkierungen kann ein Benutzer Einstellungen bzw. Justierungen an der Greifvorrichtung einfach und schnell und zudem korrekt durchführen. An den beiden Skalen ist die jeweilige aktuelle Einstellung oder Position der Einstellschlitten und des zumindest einen Querschlittens mittels eines Indikators einfach ablesbar. Insbesondere, wenn mehrere erste Skalen vorgesehen sind, kann es vorteilhaft sein, wenn diese um eine Einstellschlittenbreite versetzt skaliert sind, wodurch eine genaue Einstellbarkeit gewährleistet werden kann.

Gemäß einer besonderen Ausprägung ist es möglich, dass die erste Skale und die zweite Skale parallel zur Kontaktebene angeordnet sind, sodass diese bei Betrachtung der Unterseite der Trageplattform sichtbar sind. Dies kann einem Benutzer das Ablesen der aktuellen bzw. der neuen Einstellposition der Einstellschlitten, sowie des zumindest einen Querschlittens erheblich erleichtert. Der Benutzer muss sich während der Einstellarbeiten nicht umständlich drehen oder bewegen, um die Skalen abzulesen, sondern kann sämtliche Einstellparameter bei Betrachtung der Unterseite der Trageplattform erkennen. Darüber hinaus kann es auch sein, dass sämtliche Rastausnehmungen bzw. Rastlöcher bei Betrachtung der Unterseite sichtbar sind. Es kann aber auch sein, dass lediglich die Rastausnehmungen in der Trageplattform bei Betrachtung der Unterseite der Trageplattform sichtbar sind und dass die Rastausnehmungen des Querschlittens orthogonal zur Kontaktebene sind. So wären die Rastausnehmungen des Querschlittens für den Betrachter nur bei Betrachtung der Greifvorrichtung von der Seite her sichtbar. Die genaue Anordnung der Rastausnehmungen hängt vom Rastmechanismus ab und liegt im Ermessen des Fachmanns.

In einer besonderen Ausprägung ist es denkbar, dass die Einstellschlitten-Fixiereinrichtung als Einstellschlitten-Rasteinrichtung ausgebildet ist, und/oder dass die Querschlitten-Fixiereinrichtung als Querschlitten-Rasteinrichtung ausgebildet ist. Dabei kann die Trageplattform mit einer Mehrzahl von entlang der ersten Richtung äquidistant voneinander distanzierten Rastausnehmungen ausgebildet sein. Bevorzugt sind die Rastausnehmungen dabei im Führungsabschnitt des Querschlittens ausgebildet. Ein Rastelement der Einstellschlitten-Rasteinrichtung kann mit den Rastausnehmungen der Trageplattform in Eingriff bringbar sein. Zudem kann der Querschlitten mit einer Mehrzahl von entlang der zweite Richtung äquidistant voneinander distanzierten Rastausnehmungen ausgebildet sein und ein Rastelement der Querschlitten-Rasteinrichtung kann mit den Rastausnehmungen des Querschlittens in Eingriff bringbar sein. Bevorzugt entsprechen die Skalenmarkierungen der ersten bzw. der zweiten Skale den Abständen der jeweiligen äquidistant voneinander distanzierten bzw. diskreten Rastausnehmungen. Damit kann ein Benutzer Einstellungen bzw. Justierungen an der Greifvorrichtung einfach und schnell und zudem korrekt durchführen. An den beiden Skalen ist die jeweilige aktuelle Einstellung oder Position der Einstellschlitten und des zumindest einen Querschlittens mittels eines Indikators einfach ablesbar. Zweckmäßigerweise sind die Rastausnehmungen und die jeweilige Skale nebeneinander angeordnet, sodass ein Ablesen der aktuellen Einstellung einfach und ohne weitere Hilfsmittel präzise erfolgen kann. Grundsätzlich wäre darüber hinaus aber auch eine stufenlose Einstellbarkeit ohne äquidistant voneinander distanzierten Rastausnehmungen denkbar.

Gemäß einer Weiterbildung ist es möglich, dass das Rastelement der Einstellschlitten-Rasteinrichtung und/oder das Rastelement der Querschlitten-Rasteinrichtung als Bolzen ausgebildet ist, welcher Bolzen mit den Rastausnehmungen der Trageplattform und/oder mit den Rastausnehmungen des Querschlittens in Eingriff bringbar ist. Der Begriff Bolzen ist hierbei lediglich funktional zu interpretieren und baulich nicht einschränkend gemeint. Er umfasst dabei jegliches stiftförmige, sich entlang einer Achse erstreckendes Betätigungsmittel. Insbesondere muss ein Bolzen nicht unbedingt einen kreisrunden Querschnitt aufweisen, sondern kann beispielsweise auch oval oder rechteckig sein. Am benutzerseitigen Bolzenende kann eine Art tellerförmiger Knopf oder T-förmiger Griff ausgebildet sein, sodass ein Benutzer den Bolzen schnell und sicher betätigen kann. Der Bolzen kann mit den Rastausnehmungen bevorzugt form- und/oder kraftschlüssig in Eingriff bringbar sein. Sobald der Bolzen mit einer Rausausnehmung in Eingriff gebracht ist, wird eine Relativbewegung bzw. ein Verschieben unterbunden.

Ferner kann es zweckmäßig sein, wenn der Bolzen manuell betätigbar ist, und wenn der Bolzen mit einem federbelasteten Wirkmechanismus ausgebildet ist, wobei bevorzugt ein Federelement in seinem Ruhezustand mittels einer in axialer Richtung des Bolzens wirkenden Federkraft mit einer der Rastausnehmungen in Eingriff gebracht ist. So ist der Bolzen im Ruhezustand in eingerasteten Stellung und kann von einem Benutzer durch Ziehen entlang einer Fixierachse des Bolzens entgegen der Federkraft aus der jeweiligen Rastausnehmung gezogen bzw. herausbewegt werden. Bevorzugt erfolgt ein Verstellen der Einstellschlitten bzw. des Querschlittens mit zwei Händen. Mit der einen Hand zieht der Bediener den Bolzen aus seiner Ruhestellung, also aus der Rastausnehmung der aktuellen Einstellposition heraus und verschiebt den Einstellschlitten bzw. den Querschlitten in die neue Einstellposition. Ein Erreichen der Einstellposition kann der Bediener bevorzugt anhand der Skalen ablesen. Sobald die neue Einstellposition erreicht ist, lässt der Bediener den Bolzen bzw. das Rastelement los, wodurch der Bolzen durch selbsttätige Rückkehr der Feder in ihren Ruhezustand in die neue Rastausnehmung verbracht wird und dort mit dieser in Eingriff gebracht wird. Es kann auch sein, dass der Benutzer den Bolzen zur Fixierung in die Rastausnehmung drücken muss. Nun ist kein unbeabsichtigtes Verschieben oder Relativbewegen der Einstellschlitten bzw. des Querschlittens mehr möglich.

Darüber hinaus kann vorgesehen sein, dass die Rastausnehmungen der Trageplattform und/oder die Rastausnehmungen des Querschlittens als Rastlöcher ausgebildet sind, wobei der Bolzen mit den Rastlöchern zumindest weitgehend formkomplementär in Eingriff bringbar ist.

Des Weiteren kann vorgesehen sein, dass die Rastausnehmungen der Trageplattform und/oder die Rastausnehmungen des Querschlittens durch eine Zahnstange mit Zahnlücken gebildet sind, wobei der Bolzen mit den Zahnlücken zumindest weitgehend formkomplementär in Eingriff bringbar ist. Durch Eingriff des Bolzens in die Zahnlücken kann darüber hinaus eine Fixierung durch Kraftschluss bewirkt werden, wodurch die Fixierung noch sicherer werden kann. Insbesondere eine Ausbildung des Führungsabschnittes des Querschlittens als Zahnstange ist hier besonders zweckmäßig.

Es hat sich auch als zweckmäßig erwiesen, wenn die Einstellschlitten-Fixiereinrichtung zumindest eine Schraube umfasst, wobei mittels der Schraube eine Klemmkraft zwischen einem der Einstellschlitten und der Trageplattform aufbringbar ist. Alternativ oder zusätzlich kann vorgesehen sein, dass die Querschlitten-Fixiereinrichtung zumindest eine Schraube umfasst, wobei mittels der Schraube eine Klemmkraft zwischen dem zumindest einen Querschlitten und einem der Einstellschlitten aufbringbar ist. Eine mit einer oder mehreren Schraubverbindungen wirkende Einstellschlitten-Fixiereinrichtung bzw. Querschlitten-Fixiereinrichtung kann besonders stabil sein und eine hohe Festigkeit gewährleisten. So kann unter anderem auch ein Risiko eines unbeabsichtigten Lösens und damit einhergehender Unfälle reduziert werden.

Entsprechend einer Weiterbildung kann es sein, dass die Einstellschlitten-Fixiereinrichtung zumindest einen Klemmhebel, Exzenterhebel oder Spannhebel umfasst, wobei mittels des Klemmhebels, Exzenterhebels oder Spannhebels eine Klemmkraft zwischen einem der Einstellschlitten und der Trageplattform aufbringbar ist. Alternativ oder zusätzlich kann vorgesehen sein, dass die Querschlitten-Fixiereinrichtung zumindest einen Klemmhebel, Exzenterhebel oder Spannhebel umfasst, wobei mittels des Klemmhebels, Exzenterhebels oder Spannhebels eine Klemmkraft zwischen dem zumindest einen Querschlitten und einem der Einstellschlitten aufbringbar ist. Durch Kombination einer Schraubverbindung mit einem hebelartigen, manuell betätigbaren Schließmechanismus kann eine besonders stabile Fixierung bewirkt werden. So kann unter anderem auch ein Risiko eines unbeabsichtigten Lösens und damit einhergehender Unfälle reduziert werden, wobei zugleich ein rasches Lösen und Verstellen der Einstell- und Querschlitten erfolgen. Dabei kann es auch sein, dass der Klemmhebel, Exzenterhebel oder Spannhebel in Kombination mit einer Schraube ausgebildet ist.

Gemäß einer Weiterbildung können die Einstellschlitten-Fixiereinrichtung und/oder die Querschlitten-Fixiereinrichtung eine pneumatische Fixiereinrichtung umfassen und damit pneumatisch fixierbar sein. So kann ein Fixieren automatisiert erfolgen. Durch das Vorsehen einer pneumatischen Fixiereinrichtung kann eine Fixierung schneller und gegebenenfalls auch überaus präzise und zuverlässig erfolgen. Zudem kann mittels einer pneumatischen Fixierung der Schlitten ein hohes Maß an Sicherheit gewährleistet werden. Es kann dabei auch sein, dass die zumindest zwei Einstellschlitten und der zumindest eine Querschlitten nicht nur pneumatisch fixierbar ist, sondern zudem automatisiert pneumatisch verschiebbar sind.

Entsprechend einer vorteilhaften Weiterbildung kann vorgesehen sein, dass die Einstellschlitten-Führungen als Prismenbahnen zum formschlüssigen Eingriff mit Abschnitten der Einstellschlitten ausgebildet sind. Bevorzugt sind die Einstellschlitten-Führungen als Prismenbahnen zum formschlüssigen Eingriff mit Abschnitten beider Einstellschlitten ausgebildet. Mit dem Begriff Abschnitt ist hierbei gemeint, dass nicht der gesamte Einstellschlitten in den Einstellschlitten-Führungen aufgenommen oder gehaltert ist, sondern lediglich ein Teil davon. Bei diesem Teil oder Abschnitt kann es sich beispielsweise um eine Art Kulissenstein handeln. Bevorzugt weist jeder Einstellschlitten zwei solche Abschnitte bzw. Kulissensteine auf, wobei jeder Kulissenstein in einer der Einstellschlitten-Führung geführt ist. Dadurch kann eine besonders gute Stabilität und präzise Führbarkeit bzw. Verschiebbarkeit gewährleistet werden. Indem die beiden Einstellschlitten-Führung quasi als Schienen fungieren, ist eine gute Laufruhe gewährleistet. Dies insbesondere dann, wenn die Einstellschlitten besonders lang sind, also sich entlang der zweiten Richtung längserstrecken.

Insbesondere kann es vorteilhaft sein, wenn der Führungsabschnitt des zumindest einen Querschlittens zumindest abschnittsweise mit einem Hohlprofil ausgebildet ist, welches Hohlprofil als Unterdruck-Kanal ausgebildet ist. Dabei ist der Unterdruck-Kanal mit den Versorgungsmitteln und mit dem zumindest einen am Querschlitten angeordneten Haltemittel strömungsverbunden. Dabei können die Versorgungsmittel, ein Unterdruck-Versorgungsmodul, eine Ventilinsel und bevorzugt flexible bzw. schlauchartige Unterduck-Leitungen umfassen. Die Ventilinsel kann vorteilhafterweise an der Oberseite der Trageplattform angeordnet sein. Bevorzugt ist der Führungsabschnitt des zumindest einen Querschlittens als Hohlprofil ausgebildet. Ein solches Hohlprofil kann einen Kanal, insbesondere einen Unterdruck-Kanal definieren, wobei in dem Unterdruck-Kanal ein Unterdruck-Rohr angeordnet sein kann. Der Unterdruck-Kanal kann sich in dem Hohlprofil entlang der zweiten Richtung längserstrecken und mit dem am Querschlitten angeordneten Haltemittel strömungsverbunden sein. Zweckmäßigerweise ist das Haltemittel hierbei als Unterdruck-Haltemittel ausgebildet. Das Unterdruck-Rohr längserstreckt sich bevorzugt in einem der Einstellschlitten entlang der zweiten Richtung. Zudem ist das Unterdruck-Rohr in dem Unterdruck-Kanal entlang der zweiten Richtung verschiebbar positioniert. Das Unterdruck-Versorgungsmodul ist über die Ventilinsel mittels der Unterduck-Leitungen und dem Unterdruck-Rohr mit dem oder den Haltemitteln strömungsverbunden.

Vorteilhafterweise kann es sein, dass zumindest eine spiralförmige Versorgungs-Leitung ausgebildet ist, welche zumindest eine spiralförmige Versorgungs-Leitung zur Beaufschlagung von wenigstens einem der Haltemittel mit Unterdruck vorgesehen ist. Die zumindest eine spiralförmige Versorgungs-Leitung kann dabei an der Unterseite der Trageplattform und entlang der ersten Richtung ausgerichtet angeordnet sein. Es sich auch als vorteilhaft erwiesen, wenn die zumindest eine spiralförmige Versorgungs-Leitung von dem Führungsabschnitt des zumindest einen Querschlittens zumindest abschnittsweise durchsetzt ist. Durch das Vorsehen einer spiralförmigen bzw. gewendelten oder helikal geschraubten, bevorzugt flexiblen bzw. schlauchartigen Versorgungs-Leitung können die jeweiligen Führungsabschnitte quasi als Träger für die Versorgung beispielsweise mit Unterdruck zum Aktivieren und Deaktivieren der Haltemittel dienen. Die Spiralform ermöglicht dabei ein Verstellen bzw. Ausziehen und Einschieben der Einstell- und Querschlitten, ohne zusätzliche Hilfsmittel oder zusätzliche bauliche Komponenten. Darüber hinaus können derart ausgebildete Versorgungs-Leitungen platzsparend angeordnet sein, und ein Risiko von unerwünschten Einfädelungen oder Verhakungen oder von Beschädigungen vermieden oder gar verhindert werden. Zudem können dadurch baulich aufwändige bzw. verschleißanfällige Dichtelemente zwischen teleskopisch zueinander verstellbaren Hohlprofilen vermieden werden. Darüber hinaus sind derart angeordnete spiralförmige Versorgungs-Leitungen besonders leicht einer allfälligen Wartung und Reparatur zugänglich.

Gemäß einer Weiterbildung kann vorgesehen sein, dass die Versorgungsmittel eine Ventilinsel umfassen, welche Ventilinsel mit den Haltemitteln mittels Sperrventilen strömungsverbunden ist. Die Ventilinsel kann vorteilhafterweise an der Oberseite der Trageplattform angeordnet sein. Die einzelnen Ventile der Ventilinsel können mit jeweils einem oder gegebenenfalls auch mehreren der Haltemittel strömungsverbunden sein. Zweckmäßigerweise können das oder die Haltemittel hierbei als Unterdruck-Haltemittel ausgebildet sein. Das Unterdruck-Versorgungsmodul ist über die Ventilinsel mit dem oder den Haltemitteln strömungsverbunden. Dabei kann es besonders vorteilhaft sein, wenn die Haltemittel mittels ihrer zugehörigen Ventile der Ventilinsel bedarfsweise aktivier- und deaktivierbar sind. Eine solche Einzelhaltemittelabschaltung kann die Nutzungs- und Einstellmöglichkeiten der Greifvorrichtung zusätzlich erweitern. Die an der Ventilinsel angeordneten Ventile können dabei beispielsweise mechanisch wirkend bzw. mit einem Federrückstellmechanismus ausgebildet sein. Bevorzugt sind die Ventile separat bestrombar und mittels einer Steuerung aktivier- und deaktivierbar. Eine solche Ausbildung kann besonders sicher im Betrieb sein, insbesondere auch deshalb, weil ein etwaiger Stromausfall - im Gegensatz zu federrückstellenden Ventilen - unkritisch ist bzw. nicht zu einem unbeabsichtigten Lösen eines Werkstücks von den Haltemitteln führt.

Ferner kann vorgesehen sein, dass ein weiterer Einstellschlitten ausgebildet ist, welcher einen ersten und einen zweiten Führungsbalken umfasst. Die beiden Führungsbalken sind entlang der ersten Richtung verschiebbar. Dabei ist der Einstellschlitten mittels der Führungsbalken relativ zur Trageplattform entlang der ersten Richtung linear ausziehbar. Bevorzugt sind die Führungsbalken durch Durchbrüche an einer Stirnseite der Trageplattform oder durch Prismen- oder Profilbahnen in der Trageplattform geführt. Es kann aber auch sein, dass die Führungsbalken an der Oberseite der Trageplattform angeordnet sind bzw. in an der Oberseite der trageplattform positionieren Führungsmitteln geführt sind. Durch diese Weiterbildung können die Einstellmöglichkeiten der Greifvorrichtung auf einfache Art und Weise zusätzlich erweitert werden. Bevorzugt ist auch auf einer oder beiden der Führungsbalken eine weitere erste Skale ausgebildet, also eine Skale, welche einem Benutzer indiziert, in welcher Einstellposition sich der weitere Einstellschlitten aktuell befindet. Zweckmäßigerweise ist der weitere Einstellschlitten im Sinne einer Kosteneinsparung zumindest weitgehend baugleich mit dem ersten und dem zweiten Einstellschlitten ausgebildet. Vorteilhafterweise kann hierbei vorgesehen sein, dass die Führungsbalken des weiteren Einstellschlittens derart zueinander versetzt sind, dass diese sich gegenseitig nicht stören und insbesondere auch im eingefahrenen bzw. eingeschobenen Zustand keine unerwünschte zusätzliche Störkontur bilden.

Darüber hinaus kann vorgesehen sein, dass zumindest ein weiterer Querschlitten ausgebildet ist, an welchem Querschlitten zumindest eines der Haltemittel angeordnet ist, und welcher Querschlitten zumindest teilweise in einer Quer-Führung des weiteren Einstellschlittens aufgenommen oder gehaltert ist. Der Querschlitten ist in der Quer-Führung relativ zum Einstellschlitten entlang der zweiten Richtung verschiebbar, wobei ein in der zumindest einen Quer-Führung aufgenommener oder gehalterter Führungsabschnitt des weiteren Einstellschlittens profilförmig ist, insbesondere hohlprofilförmig ist, und wobei dieser Führungsabschnitt in der Quer-Führung linear ausziehbar ist, respektive auch wieder linear einschiebbar ist. Bevorzugt sind sämtliche Einstellschlitten und sämtliche in den Einstellschlitten aufgenommenen oder gehalterten und ausziehbaren Querschlitten der Greifvorrichtung baugleich oder zumindest weitgehend baugleich. Dies reduziert die Lagerhaltungskosten und vereinfacht etwaige Wartungs- und Reparaturarbeiten mit unter erheblich.

Vorteilhaft ist auch eine Ausprägung, gemäß welcher vorgesehen sein kann, dass parallel zu den Führungsbalken ein relativ zur Trageplattform linear ausziehbares Unterdruck-Rohr ausgebildet ist, welches Unterdruck-Rohr mit den Versorgungsmitteln und mit dem zumindest einen am weiteren Einstellschlitten angeordneten Querschlitten angeordneten Haltemittel strömungsverbunden ist. Die Versorgungsmittel können dabei aber auch ein weiteres Unterdruck-Rohr umfassen, welches in einem weiteren Unterdruck-Kanal in den bevorzugt hohlprofilförmigen Führungsbalken angeordnet ist. Alternativ kann das weitere Unterdruck-Rohr in der Trageplattform und parallel zu den Führungsbalken angeordnet sein. Bevorzugt ist das weitere Unterdruck-Rohr, bei Betrachtung der Trageplattform von der Unterseite her, zwischen den Führungsbalken positioniert. Das weitere Unterdruck-Rohr ist an dem weiteren Einstellschlitten angeordnet, wobei das an dem weiteren Querschlitten angeordnete Haltemittel mittels einer bevorzugt formflexiblen Unterdruck-Leitung und mittels des weiteren Unterdruck-Rohres mit einer Ventilinsel bzw. mit einem Unterdruck-Versorgungsmodul strömungsverbunden ist.

Gemäß einer vorteilhaften Weiterbildung kann dabei vorgesehen sein, dass die zumindest eine spiralförmige Versorgungs-Leitung von zumindest einem der Führungsbalken der Einstellschlitten zumindest abschnittsweise durchsetzt ist, oder dass die zumindest eine spiralförmige Versorgungs-Leitung zwischen den beiden Führungsbalken angeordnet ist.

Es kann auch vorgesehen sein, dass zumindest eine entlang der ersten Richtung beweglich gelagerte Energiekette ausgebildet ist, welche Energiekette zur Verschiebung der Einstellschlitten und/oder zur Verschiebung der Führungsbalken ausgebildet ist, und dass zumindest eine bevorzugt flexible bzw. schlauchförmige Unterdruck-Leitung in der Energiekette geführt ist. Durch die Ausbildung einer Energiekette zur Verschiebung der Einstellschlitten oder Führungsbalken kann eine Verschiebbarkeit bzw. Einstellbarkeit präzisiert werden. Energieketten sind in der Fachwelt auch als Energieführungsketten, E-Ketten oder Schleppketten bekannt. Eine derartige Anordnung kann besonders exakt bewegbar und zudem auch vergleichsweise platzsparend aufgebaut sein. Darüber hinaus ist eine spiralförmige Versorgungs-Leitung durch diese Ausführung gut vor Beschädigungen geschützt.

Unabhängig davon wird die Aufgabe der Erfindung auch von einem Manipulator gelöst, welcher dazu ausgebildet ist, ein zu transportierendes, bevorzugt plattenförmiges, Werkstück aufzunehmen und wieder abzugeben. Der Manipulator umfasst eine Greifvorrichtung, welche nach einem der Ansprüche ausgebildet ist.

Die Ausbildungen und Vorteile eines solchen Manipulators wurden in den vorstehenden Beschreibungsteilen bereits hinlänglich dargelegt, weshalb an dieser Stelle auf diese Passagen verwiesen wird.

Zum besseren Verständnis der Erfindung wird diese anhand der nachfolgenden Figuren näher erläutert.

Es zeigen jeweils in stark vereinfachter, schematischer Darstellung:
- Fig. 1: eine Greifvorrichtung für das Manipulieren von Werkstücken bei deren Bearbeitung mit einer Bearbeitungsmaschine in dreidimensionaler Ansicht mit Blickrichtung auf die Oberseite;
- Fig. 2: die Greifvorrichtung gemäß Fig. 1 in dreidimensionaler Ansicht mit Blickrichtung auf die Unterseite;
- Fig. 3: die Greifvorrichtung gemäß Fig. 1 in einer Ansicht von unten;
- Fig. 4: einen Querschnitt der Trageplattform und des Einstellschlittens im Bereich der Einstellschlitten-Rasteinrichtung gemäß Fig. 3;
- Fig. 5: ein alternativer Querschnitt der Trageplattform und des Einstellschlittens im Bereich der Einstellschlitten-Rasteinrichtung gemäß Fig. 3;
- Fig. 6: eine Detailansicht der Greifvorrichtung gemäß Fig. 2 mit Versorgungsmitteln in dreidimensionaler Ansicht mit Blickrichtung auf die Unterseite;
- Fig. 7: einen Längsschnitt durch die Quer-Führung zwischen dem Einstellschlitten und den beiden Querschlitten gemäß Fig. 6;
- Fig. 8: ein alternatives Ausführungsbeispiel der Greifvorrichtung in dreidimensionaler Ansicht mit Blickrichtung auf die Oberseite;
- Fig. 9: die Greifvorrichtung gemäß Fig. 8 in einer Ansicht von unten;
- Fig. 10: einen Einstellschlitten mit zwei Querschlitten in dreidimensionaler Ansicht;
- Fig. 11: eine weiteres Ausführungsbeispiel einer Greifvorrichtung in dreidimensionaler Ansicht mit Blickrichtung auf die Oberseite;
- Fig. 12: die Greifvorrichtung gemäß Fig. 11 in dreidimensionaler Ansicht mit Blickrichtung auf die Unterseite;
- Fig. 13: einen weiteren Einstellschlitten mit zwei Querschlitten in dreidimensionaler Ansicht;
- Fig. 14: ein weiteres Ausführungsbeispiel einer Greifvorrichtung in dreidimensionaler Ansicht mit Blickrichtung auf die Unterseite.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss. In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

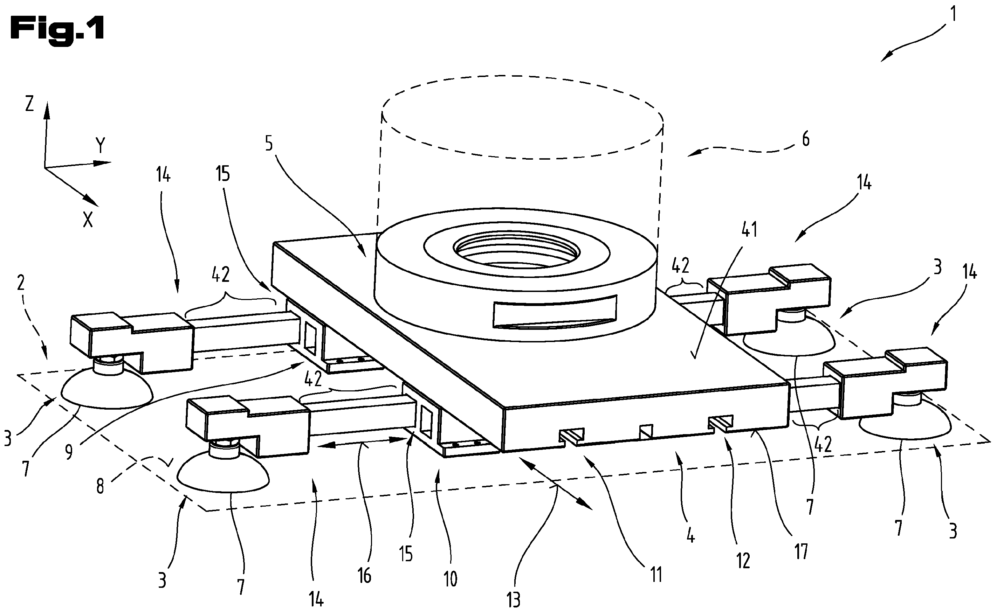

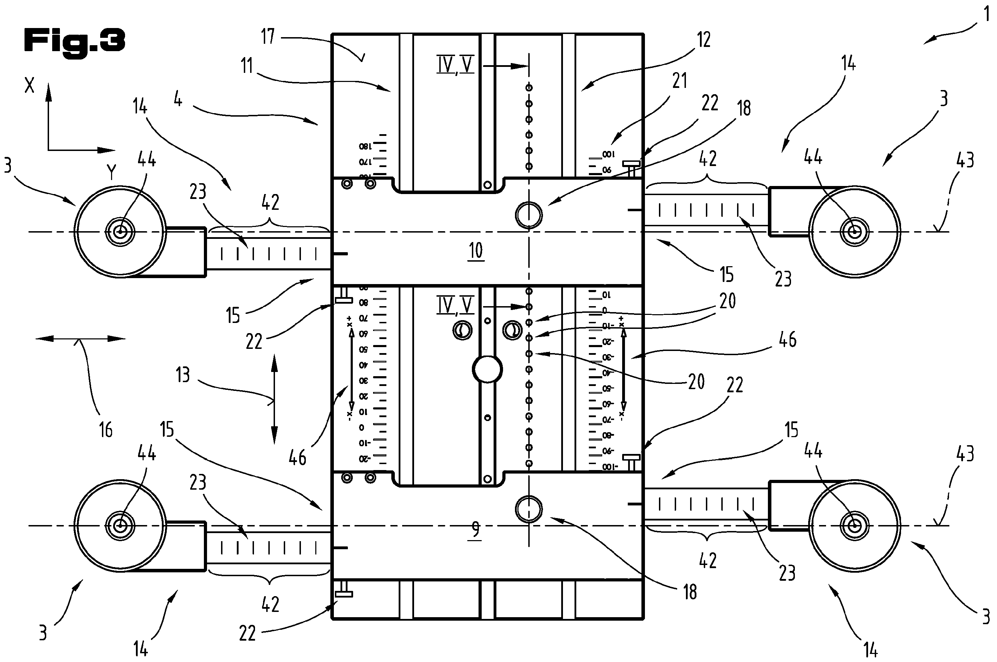

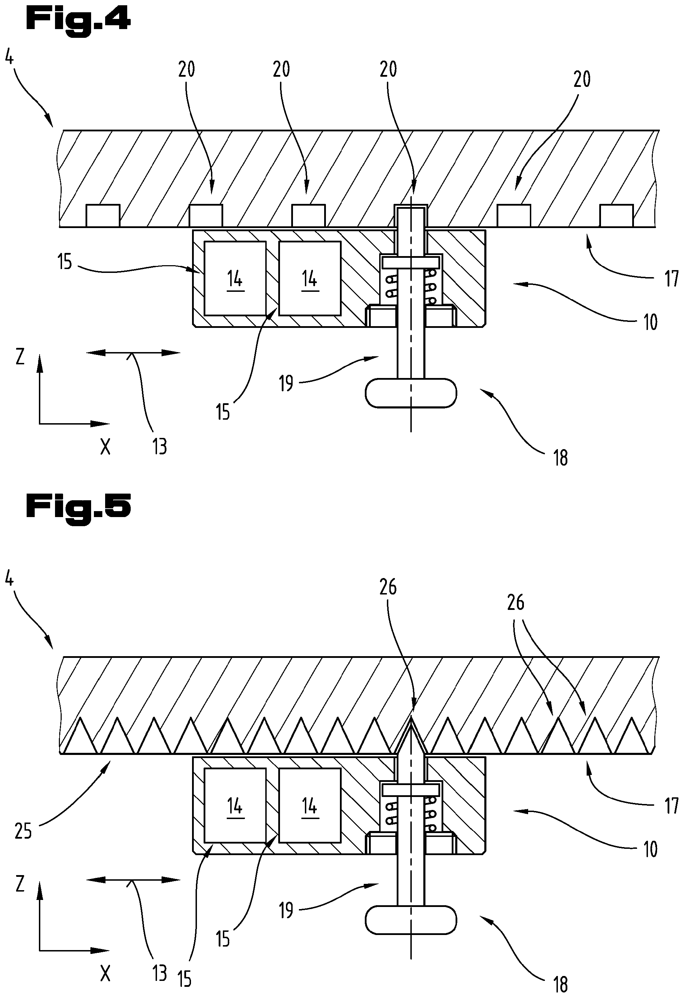

Die Fig. 1, 2, und 3, sowie die in den Fig. 4 und 5 gezeigten Schnittansichten der Fig. 3, werden nachstehend weitgehend in einer Zusammenschau beschrieben, um unnötige Wiederholungen zu vermeiden. Dabei werden für gleiche Teile gleiche Bezugszeichen bzw. gleiche Bauteilbezeichnungen verwendet.

Die Fig. 1 bis 5 zeigen eine Greifvorrichtung 1 für das Manipulieren, also zum Transportieren, respektive zum Aufnehmen und Abgeben, Übergeben oder Ablegen von bevorzugt plattenförmigen Werkstücken 2 bei deren Bearbeitung mit einer Bearbeitungsmaschine. Die Greifvorrichtung 1 umfasst dazu als zentrales Element eine Trageplattform 4 für die Haltemittel 3 mit einer Verbindungsschnittstelle 5 mit deren Hilfe die Greifvorrichtung 1 an einem Gelenkarm 6, beispielsweise eines Manipulators, insbesondere eines Gelenkarmroboters, befestigbar ist. Die Haltemittel 3 sind derart mit der Trageplattform 4 verbunden, dass diese relativ zur Trageplattform 4 verstellbar sind.

Die Trageplattform 4 weist eine Unterseite 17 und eine der Unterseite 17 gegenüberliegenden Oberseite 41 auf. Die Verbindungsschnittstelle 5 ist an der Oberseite 41 der Trageplattform 4 und zur Koppelung der Greifvorrichtung 1 mit einem Manipulator ausgebildet. Bei der Verbindungsschnittstelle 5 kann es sich um jegliche bekannte Art von Kupplungsmittel handeln. Beispielsweise kann eine Schraub- oder auch Bajonettverbindung vorgesehen sein, aber auch Flanschverbindungen sind denkbar. Zudem kann es auch sein, dass die Greifvorrichtung 1 fix, also dauerhaft bzw. nicht lösbar an einem Manipulator angeordnet ist.

Die Greifvorrichtung 1 weist mehrere Haltemittel 3 zur unmittelbaren Anlage bzw. zur direkten Befestigung an dem Werkstück 2 auf. Das Werkstück 2 ist in der Fig. 1 grobschematisch mittels strichlierter Linien exemplarisch als Blechwerkstück dargestellt. Die Haltemittel 3 können mittels in den Fig. 1 bis 5 der Einfachheit halber nicht dargestellter Versorgungsmittel 27 bedarfsweise aktiviert bzw. deaktiviert werden, wodurch das Werkstück 2 aufgenommen bzw. wieder abgelegt werden kann. Die Haltemittel 3 sind mit der Trageplattform 4 gekoppelt und weisen Kontaktseiten 7 auf, welche Kontaktseiten 7 von der Unterseite 17 der Trageplattform 4 abgewandt sind und welche Kontaktseiten 7 eine gemeinsame ebenflächige Kontaktebene 8 aufspannen bzw. definieren. Bei den dargestellten Haltemitteln 3 handelt es sich um Unterdruck-Haltemittel, welche jeweils einen Saugnapf mit einer Kontaktseite 7 zur Anlage an einem Werkstück 2 aufweisen. Ein durch Aktivieren der Haltemittel 3 aufgenommenes Werkstück 2 kann so einem Bearbeitungsbereich der Bearbeitungsmaschine zugeführt werden.

Durch das Verstellen der Haltemittel 3 relativ zur Trageplattform 4 können die Positionen der Haltemittel 3 derart geändert werden, dass sie zumindest weitgehend der Form bzw. der Ausdehnung des Werkstücks 2 bzw. der zu ergreifenden Oberfläche des Werkstücks 2 entsprechen. Das heißt, bei einem kleinen Werkstück 2 sind geringere Relativabstände der Haltemittel 3 untereinander möglich, während bei größeren Werkstücken 2 entsprechend größere Relativabstände eingestellt werden.

Die Greifvorrichtung 1 weist zumindest einen ersten Einstellschlitten 9 und einen zweiten Einstellschlitten 10 auf. Die beiden Einstellschlitten 9, 10 sind jeweils an einer zwischen den Einstellschlitten 9, 10 und der Trageplattform 4 ausgebildeten Einstellschlitten-Führung 11, 12 entlang einer ersten Richtung 13 verfahrbar. Die zumindest zwei Einstellschlitten-Führungen 11, 12 sind dazu an der Unterseite 17 der Trageplattform 4 ausgebildet. Die zumindest zwei Einstellschlitten 9, 10 sind jeweils zumindest teilweise in zumindest einer der Einstellschlitten-Führungen 11, 12 aufgenommen, und sind in den Einstellschlitten-Führungen 11, 12 relativ zur Trageplattform 4 entlang einer ersten Richtung 13 verschiebbar. Zumindest einer der Einstellschlitten 9, 10 ist mit zumindest einer Quer-Führung 15 ausgebildet. In den Fig. 1 bis 5 sind beide Einstellschlitten 9, 10 mit jeweils zwei zueinander parallelen Quer-Führungen 15 ausgebildet. In der Fig. 1 bis 5 sind zudem insgesamt vier Querschlitten 14 gezeigt, an welchen jeweils zumindest eines der Haltemittel 3 angeordnet ist. In dem gezeigten Ausführungsbeispiel ist am Endabschnitt jedes Querschlittens 14 ein einziges Haltemittel 3 positioniert. Die Querschlitten 14 sind zumindest teilweise in der jeweiligen Quer-Führung 15 aufgenommen. Zudem sind die Querschlitten 14 in diesen Quer-Führungen 15 relativ zum jeweiligen Einstellschlitten 9, 10 entlang einer zweiten Richtung 16 verschiebbar, respektive verfahr- und verstellbar. Die erste Richtung 13 und die zweite Richtung 16 sind zueinander orthogonal. In den Figuren ist die erste Richtung 13 entlang der X-Achse und die zweite Richtung 16 entlang der Y-Achse ausgerichtet.

Der zumindest eine bzw. die vier in den Fig. 1 bis 5 gezeigten Querschlitten 14 sind jeweils mit einem Führungsabschnitt 42 ausgebildet. Die jeweiligen Führungsabschnitte 42 sind in jeweils einer der Quer-Führungen 15 aufgenommen bzw. darin verschiebbar geführt und sind profilförmig, insbesondere hohlprofilförmig, ausgebildet. Die Führungsabschnitte 42 sind in den Quer-Führungen 15 linear ausziehbar und auch wieder linear einschiebbar.

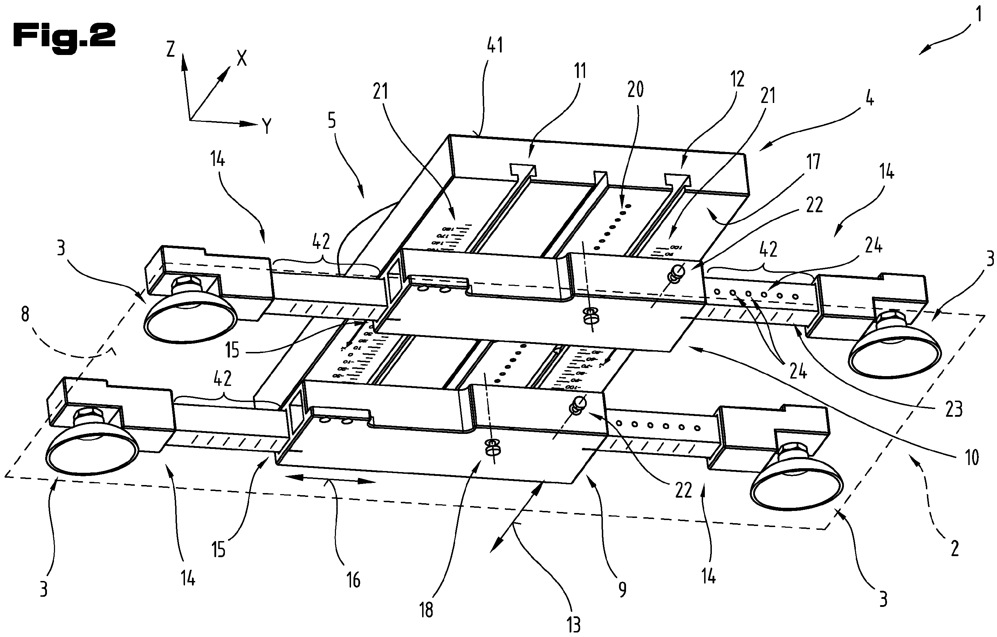

Die Fig. 2 zeigt die Greifvorrichtung 1 gemäß Fig. 1 in perspektivischer Darstellung mit einer Blickrichtung von schräg unten, also mit Blickrichtung auf die Unterseite 17 der Trageplattform 4. Die Fig. 3 zeigt die Greifvorrichtung 1 gemäß den Fig. 1 und 2 in einer Ansicht von unten, also ebenfalls mit Blickrichtung auf die Unterseite 17 der Trageplattform 4.

Die Einstellschlitten 9, 10 sind gemäß dem Ausführungsbeispiel jeweils mit zwei zueinander parallelen Quer-Führungen 15 ausgebildet, wobei in jeder Quer-Führung 15 ein ausziehbarer Querschlitten 14 aufgenommen ist. Dabei ist an jedem Querschlitten 14 zumindest eines der Haltemittel 3 angeordnet, wobei die Haltemittel 3 an einander abgewandten Endabschnitten der beiden Querschlitten 14 ausgebildet sind. Es könnten auch noch weitere Haltemittel 3 unmittelbar und damit nicht verschieblich an der Trageplattform 4 positioniert sein. Darüber hinaus wäre es auch denkbar, dass weitere Haltemittel 3 unmittelbar und damit entlang der ersten Richtung 13 verschieblich an einem oder beiden der Einstellschlitten 9, 10 positioniert sind. Diese Weiterbildungen sind jedoch nicht figürlich gezeigt.

Äquidistant zwischen den zwei zueinander parallelen Quer-Führungen 15 kann eine entlang der ersten Richtung 13 orientierte Querachse 43 liegen. An den beiden Querschlitten 14 angeordnete Haltemittel 3 können derart positioniert sein, dass sie mit ihrem jeweiligen Haltemittel-Mittelpunkt 44 auf der Querachse 43 liegen. Besonders anschaulich ist dies in der Fig. 3 visualisiert.

Die Einstellschlitten 9, 10 können jeweils mit einer Einstellschlitten-Fixiereinrichtung in Form einer Einstellschlitten-Rasteinrichtung 18 ausgebildet sein, welche unabhängig voneinander betätigbar sein können und zur bedarfsweise lösbaren Fixierung der Einstellschlitten 9, 10 gegenüber der Trageplattform 4 ausgebildet sein können. Alternativ oder zusätzlich können die Einstellschlitten 9, 10 mit einer oder mehreren Querschlitten-Fixiereinrichtungen in Form von Querschlitten-Rasteinrichtungen 22 ausgebildet sein, welche zur bedarfsweise lösbaren Fixierung des zumindest einen Querschlittens 14 gegenüber dem Einstellschlitten 9, 10 ausgebildet sein können. Besonders in den Fig. 2 bis 5 sind die Rasteinrichtungen 18, 22 veranschaulicht. Wenn die Einstellschlitten 9, 10 jeweils mit zwei Querschlitten 14 ausgebildet sind, kann es sein, dass diese beiden Querschlitten 14 mit einer einzigen Querschlitten-Rasteinrichtung 22 zugleich, respektive gemeinsam fixierbar sind. Es kann aber auch sein, dass jeder Querschlitten 14, wie in der Fig. 3 gezeigt, seine eigene Querschlitten-Rasteinrichtung 22 aufweist.

An der Trageplattform 4 kann entlang der ersten Richtung 13 zumindest eine erste Skale 21 ausgebildet sein. Die Trageplattform 4 kann zudem mit einer Mehrzahl von entlang der ersten Richtung 13 äquidistant voneinander distanzierten und entlang der ersten Richtung 13 hintereinander angeordneten Rastausnehmungen ausgebildet sein. Bevorzugt sind die Skale 21 und die mit der Skale 21 korrelierenden Rastausnehmungen nebeneinander angeordnet. Teilstriche der Skale 21 korrespondieren mit den Positionen der Rastlöcher 20. Damit wird einem Benutzer das Einstellen der gewünschten X-Position für die Halteelemente 3 entlang der ersten Richtung 13 erleichtert. Dies ist insbesondere in den Fig. 2 und 3 gut erkennbar. An der Unterseite 17 der Trageplattform 4 sind dabei zwei unterschiedlich beschriftete, bzw. um eine Einstellschlittenbreite zueinander versetzte, Skalen 21 angebracht. Mit Richtungsindikatoren 46 wird einem Benutzer eine korrekte Skaleneinstellung erleichtert. Dies ist vor allem dann zweckmäßig, wenn der Benutzer die erforderlichen Einstellparameter von einem Computerprogramm vorgeschrieben bekommt. Die Skalen 21 können dabei von einem Nullwert starten, aber sich auch, wie in der Fig. 3 ersichtlich, von einem negativen Startwert zu einem positiven Endwert erstrecken.

Sowohl in der Fig. 2, als auch in der Fig. 3 ist gut erkennbar, dass die beiden Einstellschlitten 9, 10 mit Hilfe von als Linearführung ausgebildeten Einstellschlitten-Führungen 11, 12 an der Unterseite 17 der Trageplattform 4 in der ersten Richtung 13 verfahrbar sind. Die Einstellschlitten-Führungen 11, 12 umfassen dazu Prismenbahnen zum formschlüssigen Eingriff mit Abschnitten der beiden Einstellschlitten 9, 10. Alternativ zu dem gezeigten T-förmigen Querschnitt der Einstellschlitten-Führungen 11, 12 könnten diese beispielsweise auch durch Schwalbenschwanzführungen ausgebildet sein. Bei den Abschnitten, die mit den Einstellschlitten-Führungen 11, 12 in Eingriff sind, kann es sich beispielsweise im Kulissensteine, aber auch um Rollelemente handeln.

Ein Rastelement der Einstellschlitten-Rasteinrichtung 18 kann mit den Rastausnehmungen der Trageplattform 4 in Eingriff bringbar sein. Alternativ oder zusätzlich kann an den Querschlitten 14 entlang der zweiten Richtung 16 eine zweite Skale 23 ausgebildet sein. Auch diese ist den Fig. 2 und 3 anschaulich entnehmbar. Die Querschlitten 14 können mit einer Mehrzahl von entlang der zweite Richtung 16 äquidistant voneinander distanzierten Rastausnehmungen ausgebildet sein, wobei ein Rastelement der Querschlitten-Rasteinrichtung 22 mit den Rastausnehmungen des Querschlittens 14 in Eingriff bringbar sein kann. Diese Rastausnehmungen sind an den jeweiligen Führungsabschnitten 42 der Querschlitten 14 angeordnet und im Besonderen der Darstellung in der Fig. 2 entnehmbar. Die Rastausnehmungen der Trageplattform 4 und die Rastausnehmungen des Querschlittens 14 können jeweils als Rastlöcher 20, 24 ausgebildet sein.

Die erste Skale 21 und die zweite Skale 23 können, wie in den Fig. 2 und 3 erkennbar, parallel zur Kontaktebene 8 angeordnet sein, sodass diese bei Betrachtung der Unterseite 17 der Trageplattform 4 sichtbar sind.

Im Besonderen den Fig. 4 und 5 ist ein denkbarer Funktionsmechanismus einer Rasteinrichtung 18, 22 anhand von Einstellschlitten-Rasteinrichtungen 18 veranschaulicht. Natürlich kann der gezeigte Rastmechanismus nicht nur für eine Einstellschlitten-Rasteinrichtungen 18, sondern auch für eine Querschlitten-Rasteinrichtung 22 zum Einsatz kommen. Die Fig. 4 und 5 zeigen jeweils einen Schnitt durch die Greifvorrichtung 1. Die Schnittpositionen sind dabei in der Fig. 3 durch römische Zahlen gekennzeichnet. Das in den Fig. 4 und 5 gezeigte Rastelement der Einstellschlitten-Rasteinrichtung 18 kann als Bolzen 19 ausgebildet sein. Dieser Bolzen 19 kann mit den Rastausnehmungen der Trageplattform 4 in Eingriff bringbar sein.

In analoger Weise wie für die Positionierung der Einstellschlitten 9, 10 an der Trageplattform 4 beschrieben, sind jeweils auch zur Positionierung der Querschlitten 14 an den jeweiligen Einstellschlitten 9, 10 eine Rasteinrichtung 22 und eine Skale 23 vorgesehen. Dementsprechend greifen in der aktivierten Stellung die Rasteinrichtungen 22 in Rastlöcher 24, die an den Querschlitten 14 ausgebildet sind (Fig. 2). Die Rastlöcher 24 der Querschlitten 14 sind an diesen jeweils entlang der zweiten Richtung 16 Y-Richtung äquidistant zueinander versetzt angeordnet. Mit Hilfe der Rasteinrichtungen 22 können die Querschlitten 14 in einer entsprechenden Anzahl von Raststellungen an den jeweiligen Einstellschlitten 9, 10 fixiert werden. Die Funktionsweise dieser zweiten Rasteinrichtung 22 zur Positionierung der Querschlitten 14 an dem jeweiligen Einstellschlitten 9, 10 kann dabei in gleicher Weise wie vorstehend bereits unter Bezugnahme auf die Fig. 4 und 5 für die Einstellschlitten-Rasteinrichtungen 18 beschrieben worden ist, ausgebildet sein.

Gemäß dem Ausführungsbeispiel der Fig. 4 kann die Rasteinrichtung 18 einen in axialer Richtung federbelasteten Bolzen 19 umfassen, welcher in dem Einstellschlitten 10 gelagert ist. Ein der Unterseite 17 der Trageplattform 4 zugewandtes Ende des Bolzens 19 reicht dabei in eines von einer Reihe in der Trageplattform 4 ausgebildeten Rastlöcher 20. Der Bolzen 19 bildet damit einen Riegel durch den der Einstellschlitten 10 gegenüber einer Verschiebung entlang der ersten Richtung 13 an der Trageplattform 4 fixiert ist. Die Einstellschlitten-Rasteinrichtung 18 befindet sich dabei in ihrer aktivierten bzw. eingerasteten Stellung. Zur Verstellung des Einstellschlittens 10 und damit der mit diesem verbundenen Halteelemente 3 kann die Einstellschlitten-Rasteinrichtung 18 deaktiviert werden, in dem ein Benutzer den Bolzen 19 aus seiner in dem Rastloch 20 eingerasteten Stellung zurück zieht und anschließend eine Verschiebung des Einstellschlittens 10 in Richtung der ersten Richtung 13 vornimmt. Wenn schließlich die gewünschte Position des Haltemittels 3 bzw. des Einstellschlittens 10 erreicht ist, wird durch Loslassen des Bolzens 19 die Einstellschlitten-Rasteinrichtung 18 wieder aktiviert, wobei der Bolzen 19 in einem der anderen Rastlöcher 20 einrastet. Aufgrund der Federbelastung des Bolzens 19 verbleibt die Einstellschlitten-Rasteinrichtung 18 in ihrer aktivierten, eingerasteten Stellung. Gemäß diesem Ausführungsbeispiel ist die Einstellschlitten-Rasteinrichtung 18 als ein formschlüssig wirkendes Riegelgesperre ausgebildet, wobei der Bolzen 19 als Riegel fungiert. Die Rastlöcher 20 in der Unterseite der Trageplattform 4 sind entlang der ersten Richtung 13 (X-Richtung) in äquidistanten Abständen aneinander gereiht, wie auch in den Fig. 2, 3 gezeigt ist.

Die Fig. 5 zeigt ein alternatives Ausführungsbeispiel der Einstellschlitten-Rasteinrichtung 18 bzw. der Querschlitten-Rasteinrichtung 22. In der Fig. 5 ist dazu ein Querschnitt der Trageplattform 4 und des Einstellschlittens 10 der Greifvorrichtung 1 wie in Fig. 3 angezeigt, dargestellt. Gemäß diesem Ausführungsbeispiel ist in der Unterseite 17 der Trageplattform 4 eine parallel zu der ersten Richtung 13 bzw. zur X-Richtung gerichtete Verzahnung bzw. eine Zahnstange 25 ausgebildet. In seiner aktivierten Stellung greift der Bolzen 19 der Einstellschlitten-Rasteinrichtung 18 in eine der Zahnlücken 26 der Zahnstange 25. Der Einstellschlitten 10 ist auf diese Weise gegenüber einer Verschiebung in X-Richtung 13 fixiert. Entsprechend der schrägen Neigung der Zahnflanken der Zahnstange 25 handelt es sich bei diesem Ausführungsbeispiel um eine kraftschlüssige Fixierung. Demnach können die Rastausnehmungen der Trageplattform 4 also durch eine Zahnstange 25 mit Zahnlücken 26 gebildet sein. Dabei ist der Bolzen 19 mit den Zahnlücken 26 zumindest weitgehend formkomplementär in Eingriff bringbar. Es kann aber auch sein, dass die Rastausnehmungen der Querschlitten 14 durch eine Zahnstange 25 mit Zahnlücken 26 gebildet ist. Besonders bevorzugt kann der Führungsabschnitt 42 der Querschlitten 14 als Zahnstange 25 ausgebildet sein.

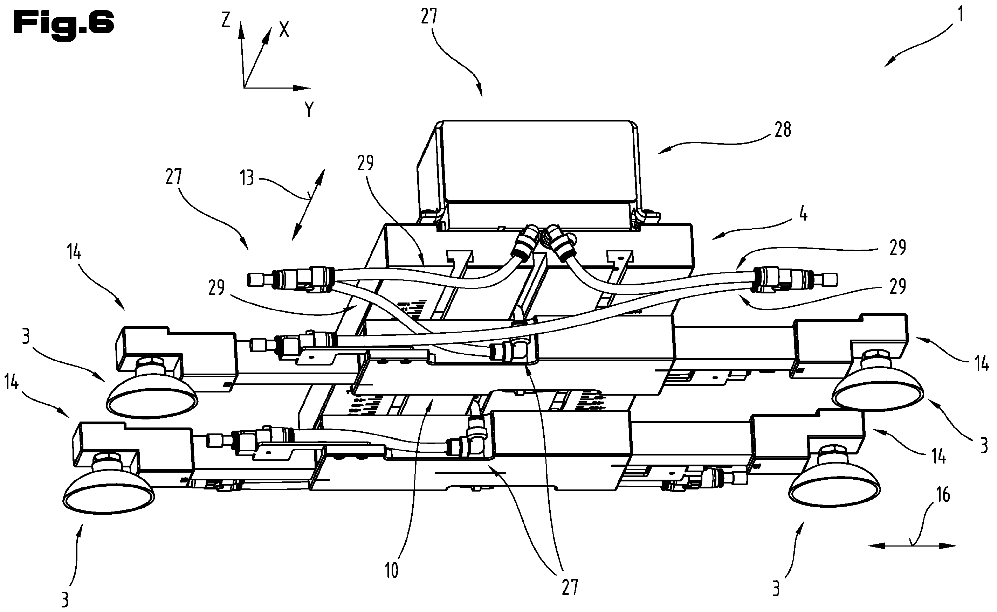

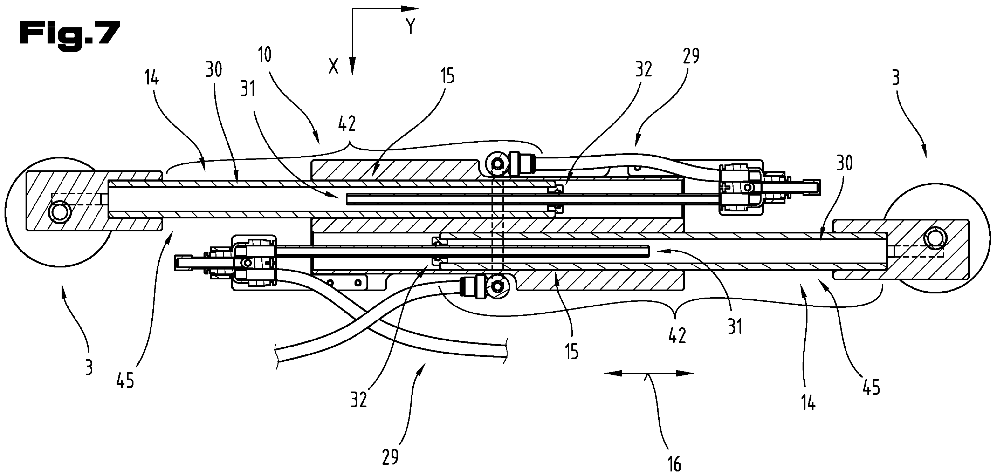

Anhand der nachfolgenden Fig. 6 und 7 werden im Weiteren Versorgungsmittel 27 zum Aktivieren und Deaktivieren der Haltemittel 3 der Greifvorrichtung 1 beschrieben. Dabei ist vorgesehen, dass es sich bei der Greifvorrichtung 1 um einen sogenannten Unterdruck- oder Vakuumgreifer handelt, wobei die Haltemittel 3 über ein entsprechendes Leitungssystem aktivier- bzw. deaktivierbare Sauger umfassen. Die Fig. 6 zeigt ein Detail der Greifvorrichtung 1 mit Versorgungsmitteln 27 gemäß Fig. 2, perspektivisch dargestellt. Am Beispiel des zweiten Einstellschlittens 10 sind in der in der Fig. 7 gezeigten Schnittdarstellung zusätzlich auch Komponenten der Versorgungsmittel 27 der Haltemittel 3 gezeigt. Zweckmäßigerweise ist das Haltemittel 3 hierbei als Unterdruck-Haltemittel ausgebildet.

Demnach können die Versorgungsmittel 27 ein (nicht figürlich gezeigtes) Unterdruck-Versorgungsmodul oder Aggregat, eine Ventilinsel 28 und bevorzugt flexible bzw. schlauchartige Unterduck-Leitungen 29 umfassen. Die Ventilinsel 28 kann vorteilhafterweise an der Oberseite 41 der Trageplattform 4 angeordnet sein. Der Führungsabschnitt 42 des zumindest einen Querschlittens 14 kann dazu, wie besonders in der Fig. 7 erkennbar ist, zumindest abschnittsweise mit einem Hohlprofil 45 ausgebildet sein. Dieses Hohlprofil 45 kann einen Unterdruck-Kanal 30 ausbilden, in welchem Unterdruck-Kanal 30 ein teleskopierbares, respektive ausschieb- und einschiebbares Unterdruck-Rohr 31 angeordnet sein kann. Der Unterdruck-Kanal 30 kann mit den Versorgungsmitteln 27 und mit dem zumindest einen am Querschlitten 14 angeordneten Haltemittel 3 strömungsverbunden sein. Der Unterdruck-Kanal 30 kann sich in dem Hohlprofil 45 entlang der zweiten Richtung 16 längserstrecken und mit dem am Querschlitten 14 angeordneten Haltemittel 3 strömungsverbunden sein. Zudem ist das Unterdruck-Rohr 31 in dem Unterdruck-Kanal 30 entlang der zweiten Richtung 16 verschiebbar positioniert. Das Unterdruck-Versorgungsmodul ist über die Ventilinsel 28 mittels der Unterduck-Leitungen 29 und dem Unterdruck-Rohr 31 mit dem oder den Haltemitteln 3 strömungsverbunden. Es kann auch sein, dass die Ventilinsel 28 mit den einzelnen Haltemitteln 3 mittels korrespondierenden Sperrventilen strömungsverbunden ist.

Diese Strömungsverbindung zur Unterdruck-Versorgung der Haltemittel 3 ist insbesondere in der Fig. 7 veranschaulicht. Die Fig. 7 zeigt einen Längsschnitt durch die beiden Quer-Führungen 15 zwischen einem der beiden Einstellschlitten 10 und den beiden Querschlitten 14 mit einer Schnittebene parallel zur X-Y-Ebene, respektive parallel zur Kontaktebene 8. Die Querschlitten 14 sind jeweils in einer der beiden Quer-Führungen 15 des Einstellschlittens 10 in parallel zu der zweiten Richtung 16 gerichteter Richtung verstellbar und ausschiebbar gelagert. Als ein Teil der Versorgungsmittel 27 der Greifvorrichtung 1 ist in dem Inneren der Querschlitten 14 jeweils ein Unterdruck-Kanal 30 ausgebildet. Andererseits ist jeweils ein mit dem Einstellschlitten 10 verbundenes Unterdruck-Rohr 31 ausgebildet, das in das Innere des Unterdruck-Kanals 30 hinein ragt. Eine Längsrichtung des Unterdruck-Kanals 30 und auch eine Längsrichtung des Unterdruck-Rohres 31 sind dabei parallel zu der Ausschubrichtung bzw. zur zweiten Richtung 16 des jeweiligen Querschlittens 14 in dem Einstellschlitten 10 ausgerichtet, wodurch der so gebildete Abschnitt der Leitung 29 bei einer Verstellung der Querschlitten 14 ausschiebbar bzw. teleskopierbar ist. Erforderlichenfalls ist zwischen dem jeweiligen Unterdruck-Kanal 30 des Querschlittens 14 und dem zugehörigen Unterdruck-Rohr 31 eine Dichtung 32 ausgebildet.

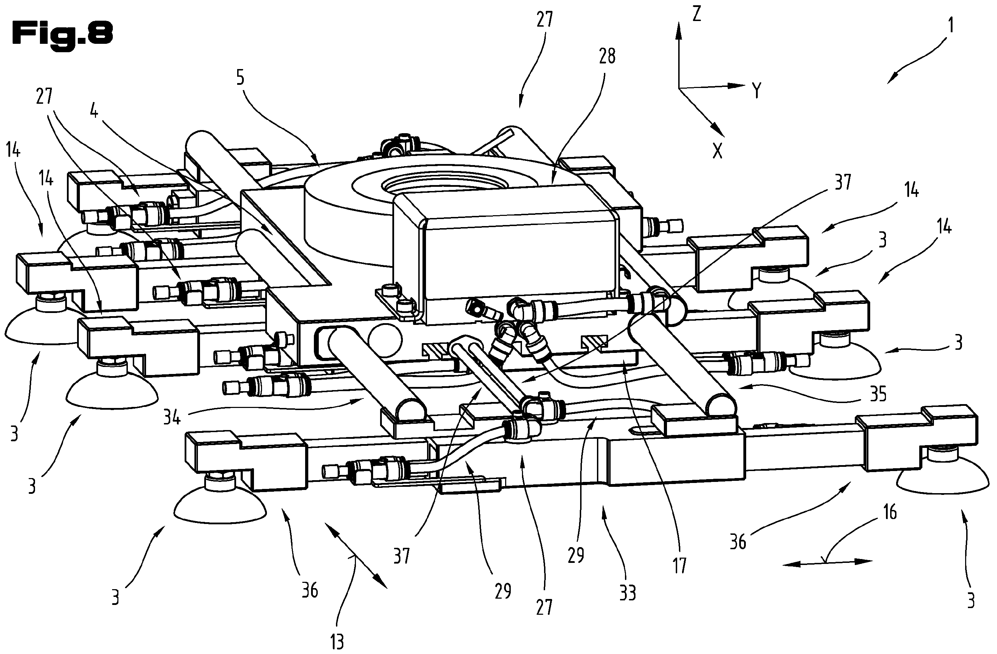

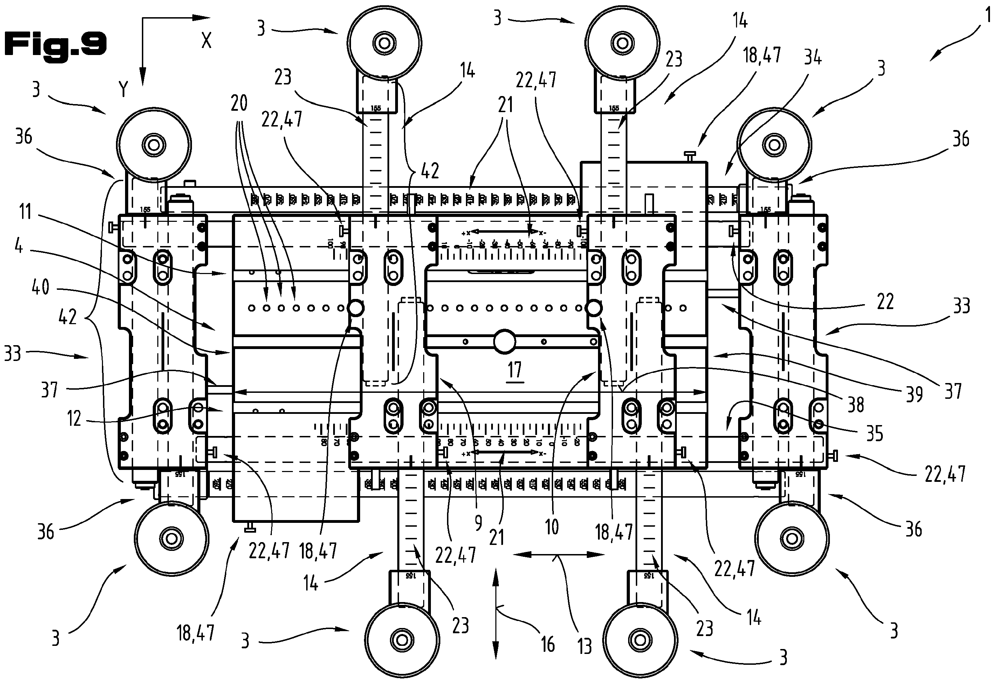

In den Fig. 8 und 9 ist eine weitere gegebenenfalls für sich eigenständige Ausführungsform der Greifvorrichtung 1 gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte vorangegangene Beschreibung hingewiesen bzw. auf diese Bezug genommen.

Neben den an der Unterseite 17 der Trageplattform 4 verfahrbar befestigten Einstellschlitten 9, 10 gemäß Fig. 1 und 2, sind bei diesem Ausführungsbeispiel zwei weitere, jeweils stirnseitig aus der Trageplattform 4 ausfahrbare Einstellschlitten 33 vorgesehen. Diese weiteren Einstellschlitten 33 umfassen dazu jeweils einen ersten 34 und einen zweiten Führungsbalken 35, die parallel zu der ersten Richtung 13 ausgerichtet sind. An den Stirnseiten 39, 40 der Trageplattform 4 sind Durchbrüche bzw. Bohrungen zur Aufnahme der Führungsbalken 34, 35 ausgebildet. Die beiden weiteren Einstellschlitten 33 sind mittels der Führungsbalken 34, 35 relativ zur Trageplattform 4 entlang der ersten Richtung 13 ausschiebbar bzw. linear ausziehbar.

In den beiden weiteren Einstellschlitten 33 können jeweils bevorzugt zwei entsprechend der zweiten Richtung 16 weitere Querschlitten 36 für jeweils zumindest ein weiteres Haltemittel 3 ausschiebbar aufgenommen sein. Dementsprechend sind auch bei den stirnseitig ausfahrbaren Einstellschlitten 33 die Querschlitten 36 an dem Einstellschlitten 33 in der zu der ersten Richtung 13 senkrechten, zweiten Richtung 16 verfahrbar. In gleicher Weise wie bei den mit der Unterseite der Trageplattform 4 verbundenen Einstellschlitten 9, 10 ist auch für den stirnseitig ausfahrbaren Einstellschlitten 33 bzw. die mit diesem verbundenen Querschlitten 36 vorgesehen, dass deren Position in einer von einer Mehrzahl von vorgegebenen Raststellungen bedarfsweise lösbar fixiert werden kann. Dafür sind zwischen der Trageplattform 4 und den Führungsbalken 34, 35 des Einstellschlittens 33 als auch jeweils zwischen den Querschlitten 36 und dem Einstellschlitten 33 Rasteinrichtungen 18, 22 wie vorstehend anhand der Fig. 4 und 5 beschrieben, ausgebildet in Fig. 8 nicht dargestellt. In der Fig. 9 ist gezeigt, dass, bei Betrachtung der Trageplattform 4 von der Unterseite 17 her, auch die Führungsbalken 34, 35 mit einer Skale 21 zur Indikation der Einstellposition ausgebildet sein können.

Parallel zu den Führungsbalken 34, 35 kann ein relativ zur Trageplattform 4 linear ausziehbares Unterdruck-Rohr 37 ausgebildet sein. Das Unterdruck-Rohr 37 kann als Komponente der Versorgungsmittel 27 mit dem zumindest einen am weiteren Einstellschlitten 33 angeordneten Querschlitten 36 angeordneten Haltemittel 3 strömungsverbunden sein. Die Versorgungsmittel 27 können dabei ein weiteres Unterdruck-Rohr 37 umfassen, welches in einem weiteren Unterdruck-Kanal 30 in den bevorzugt hohlprofilförmigen Führungsbalken 34, 35 angeordnet sein kann. Diese Variante ist figürlich nicht gezeigt. Alternativ kann gemäß den Fig. 8 und 9 das weitere Unterdruck-Rohr 37 in der Trageplattform 4 und parallel zu den Führungsbalken 34, 35 angeordnet sein. Bevorzugt ist das weitere Unterdruck-Rohr 37, bei Betrachtung der Trageplattform 4 von der Unterseite 17 her, zwischen den beiden Führungsbalken 34, 35 positioniert. Das weitere Unterdruck-Rohr 37 ist zudem an dem weiteren Einstellschlitten 33 befestigt, wobei das an dem weiteren Querschlitten 36 angeordnete Haltemittel 3 mittels einer bevorzugt formflexiblen Unterdruck-Leitung 29 und mittels des weiteren Unterdruck-Rohres 37 mit der Ventilinsel 28 bzw. mit einem Unterdruck-Versorgungsmodul strömungsverbunden.

Alternativ dazu, jedoch nicht figürlich gezeigt, kann es auch zweckmäßig sein, wenn der weitere Querschlitten 36 wie in der Fig. 7 gezeigt, mit einem in einem Unterdruck-Kanal 30 verschiebbaren Unterdruck-Rohr 31 ausgebildet ist, welches Unterdruck-Rohr 31 das Haltemittel 3 mit dem weitere Unterdruck-Rohr 37 strömungsverbindet. Damit wäre das Funktionsprinzip der Versorgungsleitungen zwischen den weiteren Einstellschlitten 33 und den damit verbundenen Querschlitten 36 in gleicher Art ausbildbar, wie vorstehend anhand der Fig. 7 beschrieben worden ist.

Die Fig. 9 zeigt die Greifvorrichtung 1 gemäß dem Ausführungsbeispiel nach Fig. 8 in einer Ansicht von unten. Aus Gründen der besseren Übersichtlichkeit sind dabei Teile der Versorgungsmittel 27 des Vakuumversorgungssystems für die Haltemittel 3 nicht dargestellt. Wie auch schon bei dem Ausführungsbeispiel gemäß den Fig. 1 bis 5, sind an der Unterseite 17 der Trageplattform 4 die beiden Einstellschlitten 9, 10 angeordnet. Dabei stehen sie mit Hilfe der Einstellschlitten-Führungen 11, 12 mit der Trageplattform 4 in Verbindung und sind in diesen Führungen 11, 12 entlang der ersten Richtung 13 verschiebbar. Dabei können sie mit Hilfe der Rasteinrichtungen 18 bzw. mit Hilfe der Rastlöcher 20 in der Unterseite 17 der Trageplattform 4 in einer von einer Mehrzahl von Raststellungen bedarfsweise fixiert werden. Die Einstellschlitten 9, 10 weisen weiters entlang der zweiten Richtung 16 in entgegengesetzter Richtung ausfahrbare Querschlitten 14 mit jeweils einem Haltemittel 3 auf. Zwischen dem Einstellschlitten 9, 10 und dem Querschlitten 14 ist jeweils die Rasteinrichtung 22 ausgebildet, wodurch auch die Querschlitten 14 bzw. deren Haltemittel 3 in einer von einer Mehrzahl vorgegebener Raststellungen bedarfsweise fixiert werden kann. Ein Benutzer kann sich zur Einstellung der Haltemittel 3 zum Auffinden der gewünschten X- bzw. Y-Position an den Skalen 21, 23, die an der Unterseite der Trageplattform 4 bzw. an den Querschlitten 14 angebracht sind, orientieren. Ein zur Verstellung der Einstellschlitten 9, 10 an der Trageplattform 4 zur Verfügung stehender Bereich erstreckt sich dabei entlang der ersten Richtung 13 über eine Länge 38 der Trageplattform 4.

Es kann auch sein, dass die Einstellschlitten-Fixiereinrichtungen bzw. die Querschlitten-Fixiereinrichtungen nicht als Rasteinrichtungen 18, 22 ausgebildet sind, sondern dass diese mittels Schrauben 47 fixierbar sind. Diese Variante ist ebenso in der Fig. 9 veranschaulicht, wobei bei einer Fixierung mittels Schrauben 47 grundsätzlich keine Rastlöcher 20 erforderlich sind. Mittels der Schrauben 47 kann eine Klemmkraft zwischen einem der Einstellschlitten 9, 10 und der Trageplattform 4 aufbringbar sein, bzw. kann eine Klemmkraft zwischen dem zumindest einen Querschlitten 14 und einem der Einstellschlitten 9, 10 aufbringbar sein.

Wie bereits anhand der Fig. 8 beschrieben, umfasst die Greifvorrichtung 1 gemäß diesem Ausführungsbeispiel zusätzlich zu den beiden Einstellschlitten 9, 10 an der Unterseite 17 der Trageplattform 4 den weiteren Einstellschlitten 33 der mittels seiner beiden Führungsbalken 34, 35 entsprechend der ersten Richtung 13 stirnseitig aus der Trageplattform 4 ausfahrbar ist. Die Führungsbalken 34, 35 des Einstellschlittens 33 sind dabei parallel zu den Einstellschlitten-Führungen 11, 12 der Einstellschlitten 9, 10 an der Unterseite 17 der Trageplattform 4 ausgerichtet. Das heißt die Richtung der Verstellung ist die gleiche wie jene der Einstellschlitten 9, 10, nämlich die erste Richtung 13 (X-Richtung). Wie nun in der Fig. 9 dargestellt, weist die Greifvorrichtung 1 gemäß diesem Ausführungsbeispiel sowohl an einer ersten Stirnseite 39 als auch an einer zweiten Stirnseite 40 den weiteren Einstellschlitten 33 auf. Die Einstellschlitten 33 sind jeweils mit zwei in entgegengesetzter Richtung ausfahrbaren Querschlitten 36 ausgebildet, wobei die Querschlitten 36 jeweils mit ihren Führungsabschnitten 42 in den Einstellschlitten 33 geführt sind. Zur bedarfsweise Fixierung der Querschlitten 36 gegenüber den Einstellschlitten 33 sind wiederum Rasteinrichtungen 22 vorgesehen. Andererseits ist zwischen dem Führungsbalken 34 des Einstellschlitten 33 und der Trageplattform 4 ebenfalls eine Rasteinrichtung 18 vorgesehen. In diesem Fall ist zum Auffinden der gewünschten Position in X-Richtung eine Skale 21 an dem Führungsbalken 34 angebracht. Ebenso wie die Querschlitten 14 weisen auch die weiteren Querschlitten 36 eine Skale 23 auf. Die Anordnung der Rasteinrichtungen 18, 22 als auch der Skalen 21, 23 in der in der Fig. 9 gezeigten Weise, bietet für einen Benutzer den Vorteil, dass die Positionseinstellungen der Haltemittel 3 in einer einzigen Stellung, nämlich mit Blickrichtung auf die Unterseite 17 der Trageplattform 4 durchgeführt werden kann.

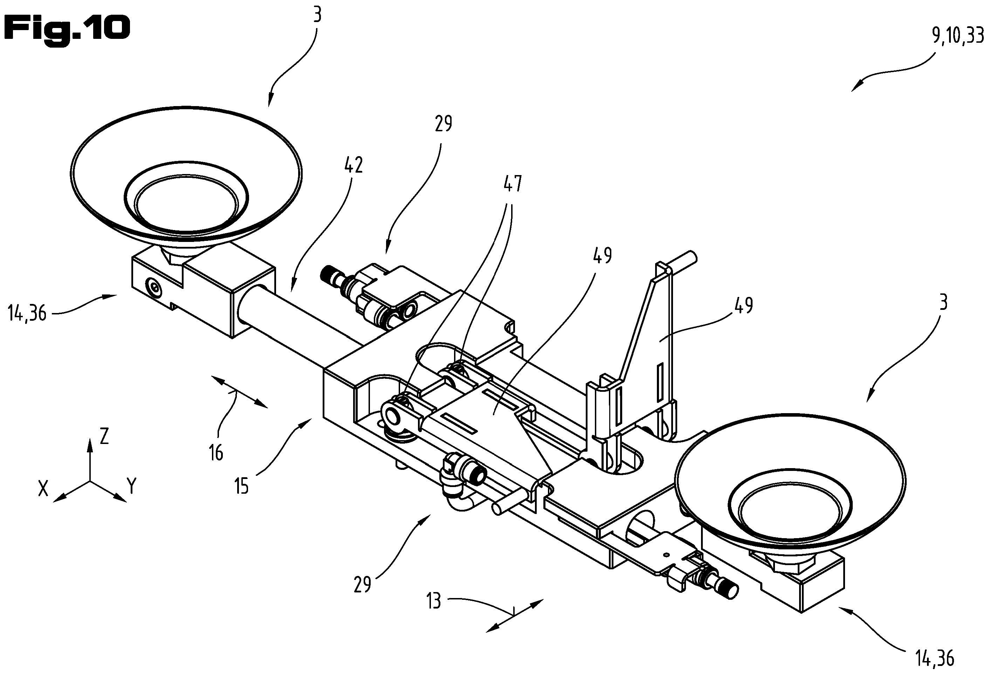

Die Fig. 10 zeigt ein Ausführungsbeispiel eines Einstellschlittens 9, 10, 33 mit zwei ausziehbaren Querschlitten 14, 36. Die Führungsabschnitte 42 der Querschlitten 14, 36 sind dabei in den beiden Quer-Führungen 15 aufgenommen. Die Führungsabschnitte 42 sind profilförmig und in den Quer-Führungen 15 entlang der zweiten Richtung 16 linear ausziehbar. Um unnötige Wiederholungen zu vermeiden wird auch hier auf die Beschreibung der vorangegangenen Figuren Bezug genommen.

Der Einstellschlitten 9, 10, 33 ist mit zwei Querschlitten-Fixiereinrichtungen zur bedarfsweise lösbaren Fixierung der zwei Querschlitten 14 gegenüber dem Einstellschlitten 9, 10 ausgebildet. Die Querschlitten-Fixiereinrichtungen sind dabei mit jeweils zwei Schrauben 47 ausgebildet, wobei mittels der Schrauben 47 eine Klemmkraft zwischen Querschlitten 14, 36 und Einstellschlitten 9, 10, 33 aufbringbar ist. Zusätzlich umfassen die Querschlitten-Fixiereinrichtungen jeweils einen Exzenterhebel 49, welcher mit den beiden Schrauben 47 gelenkig verbunden ist. In der Fig. 10 ist der linke dargestellte Querschlitten 14, 36 in seinem ausgeschobenen Zustand gezeigt, der rechte Querschlitten 14, 36 in seinem vollständig eingeschobenen Zustand. Der Exzenterhebel 49 des linken Querschlittens 14, 36 ist geschlossen und die Querschlitten-Fixiereinrichtung ist damit fixiert. Der Exzenterhebel 49 des rechten Querschlitten 14, 36 ist geöffnet bzw. aufgeklappt gezeigt. Ein Verstellen bzw. lineares Verschieben des rechten Querschlittens 14, 36 bzw. dessen Führungsabschnittes 42 ist in diesem gelösten bzw. nicht fixierten Zustand möglich.

Es versteht sich von selbst, dass die gezeigten Querschlitten-Fixiereinrichtungen auch in gleicher oder ähnlicher Art und Weise als Einstellschlitten-Fixiereinrichtungen zur bedarfsweise lösbaren Fixierung der Einstellschlitten 9, 10 gegenüber der Trageplattform 4 ausgebildet sein können.

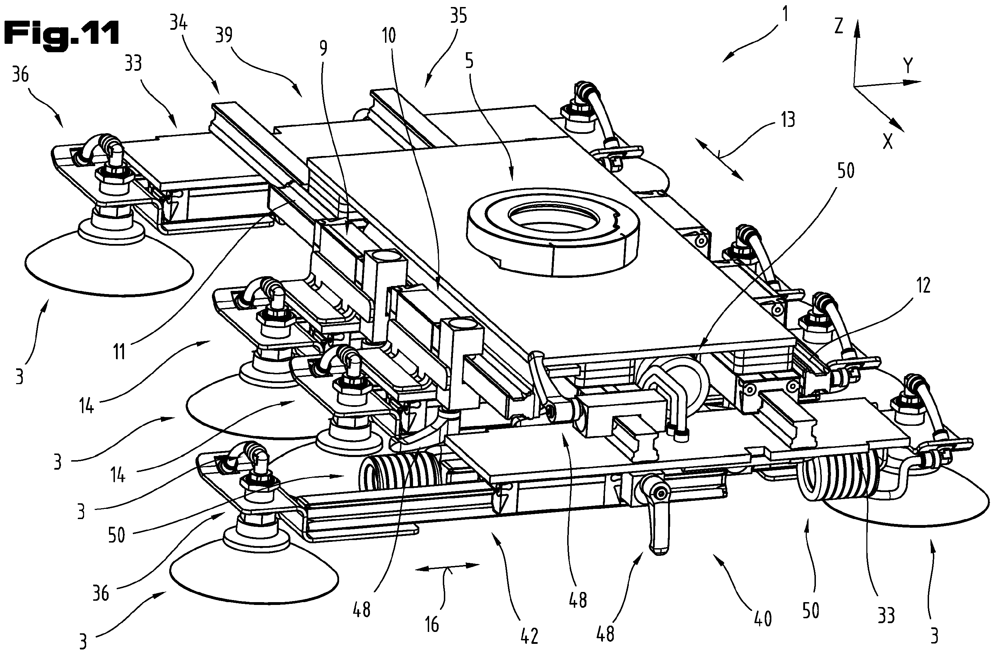

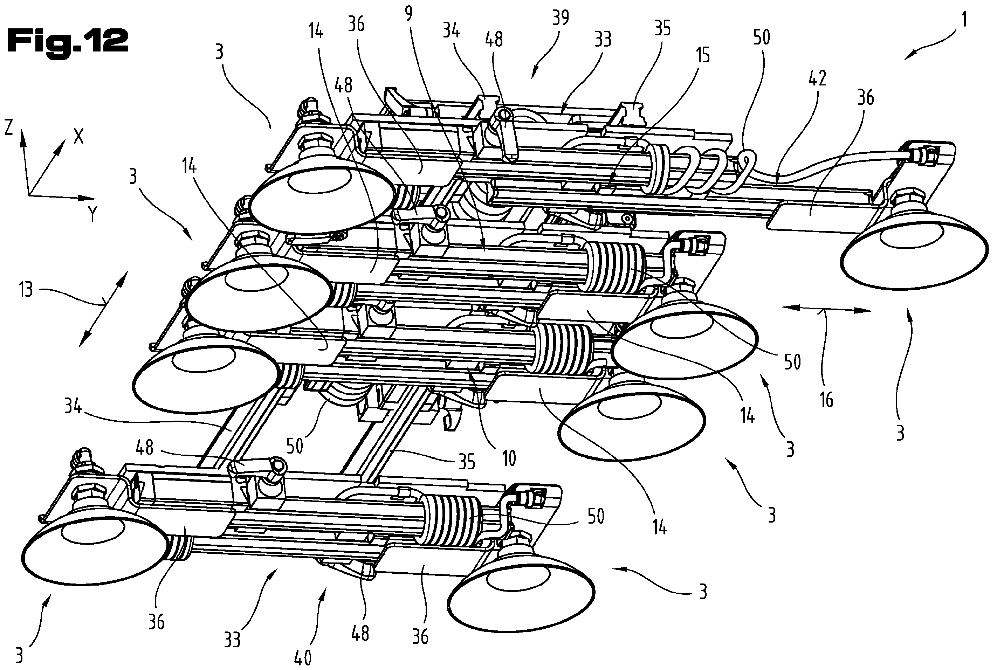

Die Fig. 11 und 12 zeigen zwei dreidimensionale Ansichten eines weiteren Ausführungsbeispiels einer Greifvorrichtung 1. Die Perspektive entspricht dabei in etwa jener der Fig. 1 und 2. Auch bei der Beschreibung der Fig. 11 und 12 wird, um unnötige Wiederholungen zu vermeiden, auf die vorangegangenen Beschreibungsteile verwiesen.

Die Greifvorrichtung 1 umfasst beispielhaft insgesamt vier Einstellschlitten 9, 10, 33. Die beiden mittleren Einstellschlitten 9, 10 können dabei, wie gezeigt, jeweils zumindest teilweise in zumindest einer der Einstellschlitten-Führungen 11, 12 aufgenommen sein. Konkret sind die beiden mittleren Einstellschlitten 9, 10 beispielsgemäß an den beiden Längsseiten der Trageplattform 4 in Nuten von profilierten Führungsschienen geführt. Zur Erhöhung der Stabilität und Laufruhe sind die beiden mittleren Einstellschlitten 9, 10 jeweils in Nuten an der Unter- und Oberseite der beiden als profilierte Führungsschienen ausgebildete Einstellschlitten-Führungen 11, 12 geführt. Die beiden mittleren Einstellschlitten 9, 10 sind in den Einstellschlitten-Führungen 11, 12 relativ zur Trageplattform 4 entlang einer ersten Richtung 13 verschiebbar. Sämtliche Einstellschlitten 9, 10, 33 umfassen jeweils zwei linear verschiebbare bzw. ausziehbare Querschlitten 14, 36. Jeder der Querschlitten 14, 36 weist an seinem Endabschnitt jeweils ein Haltemittel 3 auf. Die Haltemittel 3 sind dabei mittels eines gewinkelten Blechbauteils an dem jeweiligen Querschlitten 14, 36 befestigt. Aufgrund der Winkelform kann gewährleistet werden, dass die Haltemittel 3 möglichst wenig zur Gesamtdicke bzw. Bauhöhe der Greifvorrichtung 1 beitragen und keine unerwünschten Störkonturen gebildet sind.

Die beiden äußeren, weiteren Einstellschlitten 33 umfassen - ähnlich der Fig. 8 - jeweils einen ersten 34 und einen zweiten Führungsbalken 35, welche Führungsbalken 34, 35 entlang der ersten Richtung 13 verschiebbar sind, und welche Führungsbalken 34, 35 insbesondere durch Prismen- oder Profilbahnen in Trageplattform 4 geführt sind. Die beiden äußeren Einstellschlitten 33 sind mittels der Führungsbalken 34, 35 relativ zur Trageplattform 4 entlang der ersten Richtung 13 linear ausziehbar.

Die Einstellschlitten 9, 10, 33 sind mit jeweils einer Einstellschlitten-Fixiereinrichtung ausgebildet sind, welche Einstellschlitten-Fixiereinrichtungen unabhängig voneinander betätigbar sind und welche zur bedarfsweise lösbaren Fixierung der Einstellschlitten 9, 10, 33 gegenüber der Trageplattform 4 ausgebildet sind. Zudem sind die Einstellschlitten 9, 10, 33 mit Querschlitten-Fixiereinrichtungen ausgebildet, welche zur bedarfsweise lösbaren Fixierung der Querschlitten 14, 36 gegenüber den Einstellschlitten 9, 10, 33 ausgebildet sind. Die Einstellschlitten-Fixiereinrichtungen, sowie auch die Querschlitten-Fixiereinrichtungen sind jeweils mit einem Klemmhebel 48 ausgebildet. Mittels der Klemmhebel 48 ist eine Klemmkraft zwischen Einstellschlitten 9, 10, 33 und Trageplattform 4, insbesondere zwischen Einstellschlitten 9, 10, 33 und Einstellschlitten-Führungen 11, 12, sowie zwischen Einstellschlitten 9, 10, 33 und Führungsbalken 34, 35 aufbringbar. Zudem ist eine Klemmkraft zwischen Querschlitten 14, 36 und einem der Einstellschlitten 9, 10 aufbringbar. In der Fig. 11 sind fast alle Klemmhebel 48 in ihrem fixierten Zustand gezeigt. Lediglich der Klemmhebel 48 des einen in seinem ausgeschobenen Zustand gezeigten äußeren Querschlittens 36 ist geöffnet dargestellt, wodurch ein Verschieben bzw. Verstellen möglich ist.

In den Fig. 11 und 12 ist auch gezeigt, dass spiralförmige bzw. gewendelte und formflexible Versorgungs-Leitungen 50 ausgebildet sein können. Die spiralförmigen Versorgungs-Leitungen 50 zur Versorgung der an den Querschlitten 14, 36 angeordneten Haltemitteln 3 können von dem jeweiligen Führungsabschnitt 42 des jeweiligen Querschlittens 14, 36 zumindest abschnittsweise durchsetzt sein. Es kann aber auch sein, dass ein Einstellschlitten 9, 10, 33 gemäß dem Beispiel in der Fig. 12 zumindest zwei zueinander parallele und zueinander relativverschiebbare Querschlitten 14, 36 aufweist und dass die spiralförmigen Versorgungs-Leitung 50 von dem Führungsabschnitt 42 des jeweiligen benachbarten bzw. parallel Querschlittens 14, 36 zumindest abschnittsweise durchsetzt ist. Bei beiden genannten Varianten kann sich beim linearen Ausziehen oder Ausschiebens die spiralförmige Versorgungs-Leitung 50 dehnen bzw. auseinanderziehen.

Darüber hinaus können auch spiralförmige Versorgungs-Leitungen 50 vorgesehen sein, die von zumindest einem der Führungsbalken 34, 35 der Einstellschlitten 9, 10, 33 zumindest abschnittsweise durchsetzt sind oder - wie figürlich gezeigt - kann es auch sein, dass spiralförmige Versorgungs-Leitungen 50 zwischen den beiden Führungsbalken 34, 35 angeordnet sind.

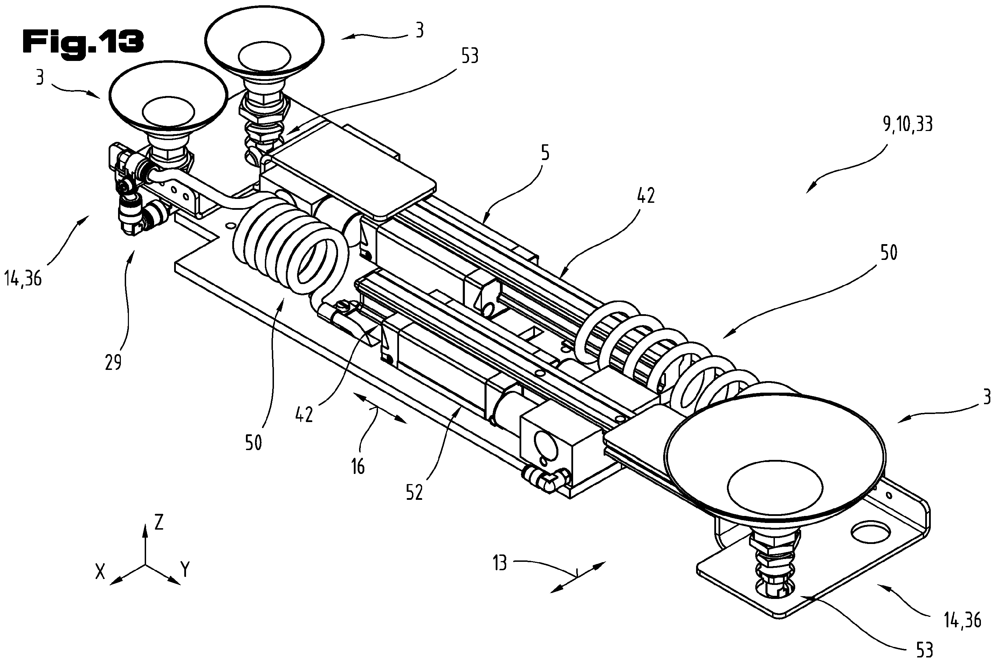

In der Fig. 13 ist ein weiterer Einstellschlitten 9, 10, 33 mit zwei Querschlitten 14, 36 in dreidimensionaler Ansicht gezeigt. Um unnötige Wiederholung zu vermeiden, wird auch hier auf die voranstehenden Beschreibungsteile, insbesondere auf die Beschreibung der Fig. 10 Bezug genommen. Zur Positionierung der Haltemittel 3 sind dabei auf jedem der Querschlitten 14, 36 mehrere Positionierdurchbrüche 53 vorgesehen, in welchen die Haltemittel 3 befestigt werden können. So können die Haltemittel 3 bedarfsgerecht an die jeweilige Werkstückgeometrie des zu manipulierenden Werkstücks 2 angepasst werden. Darüber hinaus können auch mehrere Haltemittel 3 und gegebenenfalls auch verschieden große Haltemittel 3 positioniert werden. In der Fig. 13 ist auch gezeigt, dass die Querschlitten-Fixiereinrichtung pneumatische Fixiereinrichtungen 52 umfassen kann. Natürlich kann auch die Einstellschlitten-Fixiereinrichtung eine pneumatische Fixiereinrichtung52 umfassen. Dabei ist beispielgemäß vorgesehen, dass spiralförmige Versorgungs-Leitungen 50 ausgebildet und zur Versorgung der Haltemittel 3 mit Unterdruck vorgesehen sind. Vorteilhafterweise können die spiralförmigen Versorgungs-Leitungen 50 auch zur Versorgung der pneumatische Fixiereinrichtungen 52 dienen. Die spiralförmigen Versorgungs-Leitungen 50 sind jeweils von dem Führungsabschnitt 42 der Querschlitten 14, 36 durchsetzt.

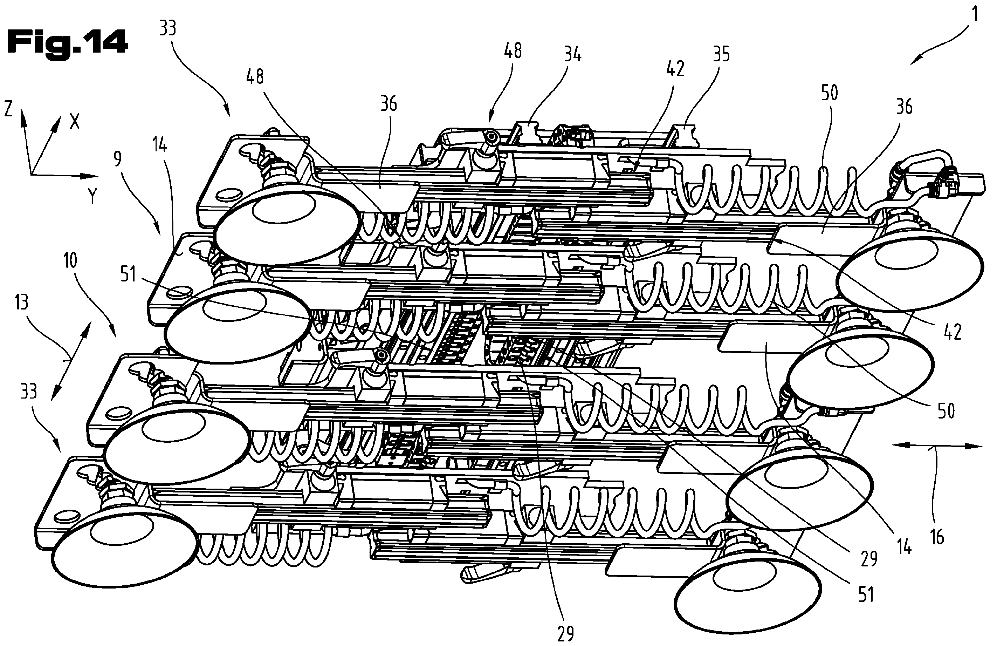

Die Fig. 14 zeigt - in Anlehnung an die Darstellung der Fig. 12 - ein weiteres Ausführungsbeispiel einer Greifvorrichtung 1 in dreidimensionaler Ansicht. Auch hier wird wiederum, um unnötige Wiederholung zu vermeiden, auf die voranstehenden Beschreibungsteile, insbesondere auf die Beschreibung der Fig. 12, hingewiesen bzw. Bezug genommen. Im Besonderen ist in der Fig. 14 eine Ausführung gezeigt, wonach entlang der ersten Richtung 13 beweglich gelagerte Energieketten 51 ausgebildet sind. Die Energieketten 51 können dabei an der Trageplattform 4 angeordnet sein. Diese Energieketten 51 sind zur Verschiebung der Einstellschlitten 9, 10 und zur Verschiebung der Führungsbalken 34, 35 ausgebildet. In den Energieketten 51 sind eine oder mehrere Unterduck-Leitungen 29 geführt. Diese Unterduck-Leitungen 29 sind wiederum mit den die Führungsabschnitte 42 der Querschlitten 14, 36 durchsetzenden spiralförmigen Versorgungs-Leitungen 50 strömungsgekoppelt. Im Gegensatz dazu ist in den Fig. 11 und 12 dargestellt, dass zur Unterdruckversorgung der Querschlitten 14, 36 bzw. der Haltemittel 3 spiralförmige Versorgungs-Leitungen 50 an der Trageplattform 4 angeordnet sein könne. Diese spiralförmigen Versorgungs-Leitungen 50 sind wiederum mit den die Führungsabschnitte 42 der Querschlitten 14, 36 durchsetzenden spiralförmigen Versorgungs-Leitungen 50 strömungsgekoppelt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| | | 30 | Unterdruck-Kanal |
| 1 | Greifvorrichtung | 31 | Unterdruck-Rohr |
| 2 | Werkstück | 32 | Dichtung |
| 3 | Haltemittel | 33 | weiterer Einstellschlitten |
| 4 | Trageplattform | 34 | Führungsbalken |
| 5 | Verbindungsschnittstelle | 35 | Führungsbalken |
| 6 | Gelenkarm | 36 | weiterer Querschlitten |
| 7 | Kontaktseite | 37 | Unterdruck-Rohr |
| 8 | Kontaktebene | 38 | Länge |
| 9 | Einstellschlitten | 39 | Stirnseite |
| 10 | Einstellschlitten | 40 | Stirnseite |
| 11 | Einstellschlitten-Führung | 41 | Oberseite |
| 12 | Einstellschlitten-Führung | 42 | Führungsabschnitt |
| 13 | erste Richtung (X-Richtung) | 43 | Querachse |
| 14 | Querschlitten | 44 | Haltemittel-Mittelpunkt |
| 15 | Quer-Führung | 45 | Hohlprofil |
| 16 | zweite Richtung (Y-Richtung) | 46 | Richtungsindikator |
| 17 | Unterseite | 47 | Schraube |
| 18 | Einstellschlitten-Rasteinrichtung | 48 | Klemmhebel |
| 19 | Bolzen | 49 | Exzenterhebel |
| 20 | Rastloch | 50 | spiralförmige Versorgungs-Leitung |
| 21 | erste Skale | | |
| 22 | Querschlitten-Rasteinrichtung | 51 | Energiekette |
| 23 | zweite Skale | 52 | pneumatische Fixiereinrichtung |
| 24 | Rastloch | 53 | Positionierdurchbruch |
| 25 | Zahnstange | | |
| 26 | Zahnlücke | | |
| 27 | Versorgungsmittel | | |
| 28 | Ventilinsel | | |
| 29 | Unterdruck- Leitung | | |

## Patentansprüche

1. Greifvorrichtung (1), welche dazu ausgebildet ist, ein zu transportierendes, bevorzugt plattenförmiges, Werkstück (2) aufzunehmen und wieder abzugeben, umfassend:
- eine Trageplattform (4) mit einer Unterseite (17), und einer der Unterseite (17) gegenüberliegenden Oberseite (41),
- welche Trageplattform (4) an der Oberseite (41) mit einer Verbindungsschnittstelle (5) ausgebildet ist oder mit einer Verbindungsschnittstelle (5) koppelbar ist, welche Verbindungsschnittstelle (5) zur Koppelung der Greifvorrichtung (1) mit einem Manipulator ausgebildet ist, und
- welche Trageplattform (4) an der Unterseite (17) mit zumindest zwei Einstellschlitten-Führungen (11, 12) ausgebildet ist,
- eine Mehrzahl an Haltemitteln (3),
- welche Haltemittel (3) zum Halten des Werkstücks (2) ausgebildet sind,
- welche Haltemittel (3) mit der Trageplattform (4) gekoppelt sind, und
- welche Haltemittel (3) Kontaktseiten (7) aufweisen, welche Kontaktseiten (7) von der Unterseite (17) der Trageplattform (4) abgewandt sind, und welche Kontaktseiten (7) eine gemeinsame Kontaktebene (8) aufspannen,
- Versorgungsmittel (27), welche Versorgungsmittel (27) zum Aktivieren und Deaktivieren der Haltemittel (3) ausgebildet sind,
- zumindest zwei Einstellschlitten (9, 10),
- welche Einstellschlitten (9, 10) jeweils zumindest teilweise in zumindest einer der Einstellschlitten-Führungen (11, 12) aufgenommen oder gehaltert sind, und
- welche Einstellschlitten (9, 10) in den Einstellschlitten-Führungen (11, 12) relativ zur Trageplattform (4) entlang einer ersten Richtung (13) verschiebbar sind,
- wobei zumindest einer der Einstellschlitten (9, 10) mit zumindest einer Quer-Führung (15) ausgebildet ist, und
- zumindest einen Querschlitten (14),
- an welchem Querschlitten (14) zumindest eines der Haltemittel (3) angeordnet ist, und
- welcher Querschlitten (14) zumindest teilweise in der Quer-Führung (15) aufgenommen oder gehaltert ist, und
- welcher Querschlitten (14) in der Quer-Führung (15) relativ zum Einstellschlitten (9, 10) entlang einer zweiten Richtung (16) verschiebbar ist,
- wobei die erste Richtung (13) und die zweite Richtung (16) zueinander orthogonal sind,
**dadurch gekennzeichnet, dass**
ein in der zumindest einen Quer-Führung (15) aufgenommener oder gehalterter Führungsabschnitt (42) des zumindest einen Querschlittens (14) profilförmig ist, und
wobei dieser Führungsabschnitt (42) in der Quer-Führung (15) linear ausziehbar ist.

2. Greifvorrichtung (1) nach Anspruch 1, **dadurch gekennzeichnet, dass** zumindest einer der Einstellschlitten (9, 10) mit zwei zueinander parallelen Quer-Führungen (15) ausgebildet ist, und dass in jeder Quer-Führung (15) ein ausziehbarer Querschlitten (14) aufgenommen ist, wobei an jedem Querschlitten (14) zumindest eines der Haltemittel (3) angeordnet ist, und wobei die Haltemittel (3) an einander abgewandten Endabschnitten der beiden Querschlitten (14) ausgebildet sind.

3. Greifvorrichtung (1) nach einem der vorhergehenden Ansprüche, **dadurch gekennzeichnet, dass** die Einstellschlitten (9, 10) mit jeweils einer Einstellschlitten-Fixiereinrichtung ausgebildet sind, welche Einstellschlitten-Fixiereinrichtungen unabhängig voneinander betätigbar sind, und welche Einstellschlitten-Fixiereinrichtungen zur bedarfsweise lösbaren Fixierung der Einstellschlitten (9, 10) gegenüber der Trageplattform (4) ausgebildet sind und/oder, dass die Einstellschlitten (9, 10) mit einer Querschlitten-Fixiereinrichtung ausgebildet sind, welche Querschlitten-Fixiereinrichtung zur bedarfsweise lösbaren Fixierung des zumindest einen Querschlittens (14) gegenüber dem Einstellschlitten (9, 10) ausgebildet ist.

4. Greifvorrichtung (1) nach einem der vorhergehenden Ansprüche, **dadurch gekennzeichnet, dass** an der Trageplattform (4) entlang der ersten Richtung (13) zumindest eine erste Skale (21) ausgebildet ist und/oder, dass am zumindest einen Querschlitten (14) entlang der zweiten Richtung (16) eine zweite Skale (23) ausgebildet ist, wobei die erste Skale (21) und die zweite Skale (23) bevorzugt parallel zur Kontaktebene (8) angeordnet sind, sodass diese bei Betrachtung der Unterseite (17) der Trageplattform (4) sichtbar sind.

5. Greifvorrichtung (1) nach Anspruch 3 oder 4, **dadurch gekennzeichnet, dass** die Einstellschlitten-Fixiereinrichtung als Einstellschlitten-Rasteinrichtung (18) ausgebildet ist, und/oder dass die Querschlitten-Fixiereinrichtung als Querschlitten-Rasteinrichtung (22) ausgebildet ist, und dass die Trageplattform (4) mit einer Mehrzahl von entlang der ersten Richtung (13) äquidistant voneinander distanzierten Rastausnehmungen ausgebildet ist, und dass ein Rastelement der Einstellschlitten-Rasteinrichtung (18) mit den Rastausnehmungen der Trageplattform (4) in Eingriff bringbar ist, und dass der Querschlitten (14) mit einer Mehrzahl von entlang der zweiten Richtung (16) äquidistant voneinander distanzierten Rastausnehmungen ausgebildet ist und dass ein Rastelement der Querschlitten-Rasteinrichtung (22) mit den Rastausnehmungen des Querschlittens (14) in Eingriff bringbar ist.

6. Greifvorrichtung (1) nach Anspruch 5, **dadurch gekennzeichnet, dass** das Rastelement der Einstellschlitten-Rasteinrichtung (18) und/oder das Rastelement der Querschlitten-Rasteinrichtung (22) als Bolzen (19) ausgebildet ist, welcher Bolzen (19) mit den Rastausnehmungen der Trageplattform (4) und/oder mit den Rastausnehmungen des Querschlittens (14) in Eingriff bringbar ist.

7. Greifvorrichtung (1) nach einem der Ansprüche 3 bis 6, **dadurch gekennzeichnet, dass** die Einstellschlitten-Fixiereinrichtung zumindest eine Schraube (47) umfasst, wobei mittels der Schraube (47) eine Klemmkraft zwischen einem der Einstellschlitten (9, 10) und der Trageplattform (4) aufbringbar ist, und/oder dass die Querschlitten-Fixiereinrichtung zumindest eine Schraube (47) umfasst, wobei mittels der Schraube (47) eine Klemmkraft zwischen dem zumindest einen Querschlitten (14) und einem der Einstellschlitten (9, 10) aufbringbar ist.

8. Greifvorrichtung (1) nach einem der Ansprüche 3 bis 7, **dadurch gekennzeichnet, dass** die Einstellschlitten-Fixiereinrichtung zumindest einen Klemmhebel (48), Exzenterhebel (49) oder Spannhebel umfasst, wobei mittels des Klemmhebels (48), Exzenterhebels (49) oder Spannhebels eine Klemmkraft zwischen einem der Einstellschlitten (9, 10) und der Trageplattform (4) aufbringbar ist, und/oder dass die Querschlitten-Fixiereinrichtung zumindest einem Klemmhebel (48), Exzenterhebel (49) oder Spannhebel umfasst, wobei mittels des Klemmhebels (48), Exzenterhebels (49) oder Spannhebels eine Klemmkraft zwischen dem zumindest einen Querschlitten (14) und einem der Einstellschlitten (9, 10) aufbringbar ist.

9. Greifvorrichtung (1) nach einem der Ansprüche 3 bis 8, **dadurch gekennzeichnet, dass** die Einstellschlitten-Fixiereinrichtung und/oder die Querschlitten-Fixiereinrichtung eine pneumatische Fixiereinrichtung (52) umfasst.

10. Greifvorrichtung (1) nach einem der vorhergehenden Ansprüche, **dadurch gekennzeichnet, dass** die Einstellschlitten-Führungen (11, 12) als Prismenbahnen zum formschlüssigen Eingriff mit Abschnitten der Einstellschlitten (9, 10) ausgebildet sind, insbesondere dass die Einstellschlitten-Führungen (11, 12) als Prismenbahnen zum formschlüssigen Eingriff mit Abschnitten beider Einstellschlitten (9, 10) ausgebildet sind.

11. Greifvorrichtung (1) nach einem der vorhergehenden Ansprüche, **dadurch gekennzeichnet, dass** der Führungsabschnitt (42) des zumindest einen Querschlittens (14) zumindest abschnittsweise mit einem Hohlprofil (45) ausgebildet ist, welches Hohlprofil (45) als Unterdruck-Kanal (30) ausgebildet ist, wobei der Unterdruck-Kanal (30) mit den Versorgungsmitteln (27) und mit dem zumindest einen am Querschlitten (14) angeordneten Haltemittel (3) strömungsverbunden ist.

12. Greifvorrichtung (1) nach einem der vorhergehenden Ansprüche, **dadurch gekennzeichnet, dass** zumindest eine spiralförmige Versorgungs-Leitung (50) ausgebildet ist, welche zumindest eine spiralförmige Versorgungs-Leitung (50) zur Beaufschlagung von wenigstens einem der Haltemittel (3) mit Unterdruck vorgesehen ist.

13. Greifvorrichtung (1) nach Anspruch 12, **dadurch gekennzeichnet, dass** die zumindest eine spiralförmige Versorgungs-Leitung (50) von dem Führungsabschnitt (42) des zumindest einen Querschlittens (14) zumindest abschnittsweise durchsetzt ist.

14. Greifvorrichtung (1) nach einem der vorhergehenden Ansprüche, **dadurch gekennzeichnet, dass** die Versorgungsmittel (27) eine Ventilinsel (28) umfassen, welche Ventilinsel (28) mit den Haltemitteln (3) mittels Sperrventilen strömungsverbunden ist.

15. Greifvorrichtung (1) nach einem der vorhergehenden Ansprüche, **dadurch gekennzeichnet, dass** ein weiterer Einstellschlitten (33) ausgebildet ist, welcher Einstellschlitten (33) einen ersten Führungsbalken (34) und einen zweiten Führungsbalken (35) umfasst, welche Führungsbalken (34, 35) entlang der ersten Richtung (13) verschiebbar sind, und welche Führungsbalken (34, 35) insbesondere durch Durchbrüche an einer Stirnseite (39, 40) der Trageplattform (4) oder durch Prismen- oder Profilbahnen in der Trageplattform (4) geführt sind, wobei der Einstellschlitten (33) mittels der Führungsbalken (34, 35) relativ zur Trageplattform (4) entlang der ersten Richtung (13) linear ausziehbar ist.

16. Greifvorrichtung (1) nach Anspruch 15, **dadurch gekennzeichnet, dass** zumindest ein weiterer Querschlitten (36) ausgebildet ist, an welchem Querschlitten (36) zumindest eines der Haltemittel (3) angeordnet ist, und welcher Querschlitten (36) zumindest teilweise in einer Quer-Führung (15) des weiteren Einstellschlittens (33) aufgenommen ist, und welcher Querschlitten (36) in der Quer-Führung (15) relativ zum Einstellschlitten (33) entlang der zweiten Richtung (16) verschiebbar ist, wobei ein in der zumindest einen Quer-Führung (15) aufgenommener Führungsabschnitt (42) des weiteren Einstellschlittens (33) profilförmig ist, insbesondere hohlprofilförmig ist, und wobei dieser Führungsabschnitt (42) in der Quer-Führung (15) linear ausziehbar ist.

17. Greifvorrichtung (1) nach Anspruch 16, **dadurch gekennzeichnet, dass** parallel zu den Führungsbalken (34, 35) ein relativ zur Trageplattform (4) linear ausziehbares Unterdruck-Rohr (37) ausgebildet ist, welches Unterdruck-Rohr (37) mit den Versorgungsmitteln (27) und mit dem zumindest einen am weiteren Einstellschlitten (33) angeordneten Querschlitten (36) angeordneten Haltemittel (3) strömungsverbunden ist.

18. Greifvorrichtung (1) nach einem der Ansprüche 15 bis 17, **dadurch gekennzeichnet, dass** die zumindest eine spiralförmige Versorgungs-Leitung (50) von zumindest einem der Führungsbalken (34, 35) der Einstellschlitten (9, 10) zumindest abschnittsweise durchsetzt ist oder dass die zumindest eine spiralförmige Versorgungs-Leitung (50) zwischen den beiden Führungsbalken (34, 35) angeordnet ist.

19. Greifvorrichtung (1) nach einem der vorhergehenden Ansprüche, **dadurch gekennzeichnet, dass** zumindest eine entlang der ersten Richtung (13) beweglich gelagerte Energiekette (51) ausgebildet ist, welche Energiekette (51) zur Verschiebung der Einstellschlitten (9, 10) und/oder zur Verschiebung der Führungsbalken (34, 35) ausgebildet ist, und dass zumindest eine Unterduck-Leitung (29) in der Energiekette (51) geführt ist.

20. Manipulator, welcher dazu ausgebildet ist, ein zu transportierendes, bevorzugt plattenförmiges, Werkstück (2) aufzunehmen und wieder abzugeben, umfassend eine Greifvorrichtung (1), **dadurch gekennzeichnet, dass** die Greifvorrichtung (1) nach einem der Ansprüche 1 bis 19 ausgebildet ist.

## Claims

1. A gripping device (1), which is configured for receiving a, preferably plate-like, workpiece (2) to be transported, and for releasing it again, comprising:
- a supporting platform (4) with a bottom side (17) and a top side (41) located opposite the bottom side (17),
- which supporting platform (4) is configured, on the top side (41), with a connection interface (5), or can be coupled to a connection interface (5), which connection interface (5) is configured for coupling the gripping device (1) to a manipulator, and
- which supporting platform (4) is configured, on the bottom side (17), with at least two adjustment-slide guides (11, 12),
- a plurality of retaining means (3),
- which retaining means (3) are configured for retaining the workpiece (2),
- which retaining means (3) are coupled to the supporting platform (4), and
- which retaining means (3) have contact sides (7), which contact sides (7) face away from the bottom side (17) of the supporting platform (4), and which contact sides (7) tenter a joint contact plane (8),
- supply means (27), which supply means (27) are configured for activating and deactivating the retaining means (3),
- at least two adjustment slides (9, 10),
- which adjustment slides (9, 10) are each at least partially received or supported in at least one of the adjustment-slide guides (11, 12), and
- which adjustment slides (9, 10) are slidable relative to the supporting platform (4) along a first direction (13) in the adjustment-slide guides (11, 12),
- wherein at least one of the adjustment slides (9, 10) is configured with at least one transverse guide (15), and
- at least one transverse slide (14),
- on which transverse slide (14) at least one of the retaining means (3) is arranged, and
- which transverse slide (14) is at least partially received or supported in the transverse guide (15), and
- which transverse slide (14) is slidable relative to the adjustment slide (9, 10) along a second direction (16) in the transverse guide (15),
- wherein the first direction (13) and the second direction (16) are mutually orthogonal,
**characterized in that**
a guide section (42) of the at least one transverse slide (14), which guide section (42) is received or supported in the at least one transverse guide (15), is profiled, and
wherein this guide section (42) is linearly extendable in the transverse guide (15).

2. The gripping device (1) according to claim 1, **characterized in that** at least one of the adjustment slides (9, 10) is configured with two parallel transverse guides (15), and that an extendable transverse slide (14) is received in each transverse guide (15), wherein at least one of the retaining means (3) is arranged on each transverse slide (14), and wherein the retaining means (3) are configured on end sections of the two transverse slides (14), which end sections face away from each other.

3. The gripping device (1) according to any one of the preceding claims, **characterized in that** the adjustment slides (9, 10) are each configured with an adjustment-slide fixing means, which adjustment-slide fixing means are actuatable independently, and which adjustment-slide fixing means are configured for fixing the adjustment slides (9, 10) relative to the supporting platform (4), releasably as required, and/or that the adjustment slides (9, 10) are configured with a transverse-slide fixing means, which transverse-slide fixing means is configured for fixing the at least one transverse slide (14) relative to the adjustment slide (9, 10).

4. The gripping device (1) according to any one of the preceding claims, **characterized in that** at least one first scale (21) is configured on the supporting platform (4) along the first direction (13) and/or that a second scale (23) is configured on the at least one transverse slide (14) along the second direction (16), wherein the first scale (21) and the second scale (23) are arranged preferably parallel to the contact plane (8), so that they are visible when viewing the bottom side (17) of the supporting platform (4).

5. The gripping device (1) according to claim 3 or 4, **characterized in that** the adjustment-slide fixing means as is configured as an adjustment-slide snap-in means (18), and/or that the transverse-slide fixing means is configured as a transverse-slide snap-in means (22), and that the supporting platform (4) is configured with a plurality of snap-in recesses spaced equidistantly apart from one another along the first direction (13), and that a snap-in element of the adjustment-slide snap-in means (18) is engageable with the snap-in recesses of the supporting platform (4),
and that the transverse slide (14) is configured with a plurality of snap-in recesses spaced equidistantly apart from one another along the second direction (16) and that a snap-in element of the transverse-slide snap-in means (22) is engageable with the snap-in recesses of the transverse slide (14).

6. The gripping device (1) according to claim 5, **characterized in that** the snap-in element of the adjustment-slide snap-in means (18) and/or the snap-in element of the transverse-slide snap-in means (22) is configured as a bolt (19), which bolt (19) is engageable with the snap-in recesses of the supporting platform (4) and/or with the snap-in recesses of the transverse slide (14).

7. The gripping device (1) according to any one of the claims 3 to 6, **characterized in that** the adjustment-slide fixing means comprises at least one screw (47), wherein a clamping force between one of the adjustment slides (9, 10) and the supporting platform (4) is applicable by means of the screw (47), and/or that the transverse-slide fixing means comprises at least one screw (47), wherein a clamping force between the at least one transverse slide (14) and one of the adjustment slides (9, 10) is applicable by means of the screw (47).

8. The gripping device (1) according to any one of the claims 3 to 7, **characterized in that** the adjustment-slide fixing means comprises at least one clamping lever (48), cam lever (49) or tension lever, wherein a clamping force between one of the adjustment slides (9, 10) and the supporting platform (4) is applicable by means of the clamping lever (48), cam lever (49) or tension lever, and/or that the transverse-slide fixing means comprises at least one clamping lever (48), cam lever (49) or tension lever, wherein a clamping force between the at least one transverse slide (14) and one of the adjustment slides (9, 10) is applicable by means of the clamping lever (48), cam lever (49) or tension lever.

9. The gripping device (1) according to any one of the claims 3 to 8, **characterized in that** the adjustment-slide fixing means and/or the transverse-slide fixing means comprises a pneumatic fixing means (52).

10. The gripping device (1) according to any one of the preceding claims, **characterized in that** the adjustment-slide guides (11, 12) are configured as prism tracks for the form-fitting engagement with sections of the adjustment slides (9, 10), in particular that the adjustment-slide guides (11, 12) are configured as prism tracks for the form-fitting engagement with sections of both adjustment slides (9, 10).

11. The gripping device (1) according to any one of the preceding claims, **characterized in that** the guide section (42) of the at least one transverse slide (14) is configured, at least in sections, with a hollow profile (45), which hollow profile (45) is configured as a vacuum canal (30), wherein the vacuum canal (30) is flow-connected to the supply means (27) and to the at least one retaining means (3) arranged on the transverse slide (14).

12. The gripping device (1) according to any one of the preceding claims, **characterized in that** at least one spiral supply line (50) is configured, which at least one spiral supply line (50) is provided to apply a vacuum to at least one of the retaining means (3).

13. The gripping device (1) according to claim 12, **characterized in that** the at least one spiral supply line (50) is filled, at least in sections, by the guide section (42) of the at least one transverse slide (14).

14. The gripping device (1) according to any one of the preceding claims, **characterized in that** the supply means (27) comprise a valve island (28), which valve island (28) is flow-connected to the retaining means (3) by means of shut-off valves.

15. The gripping device (1) according to any one of the preceding claims, **characterized in that** another adjustment slide (33) is configured, which adjustment slide (33) comprises a first guide bar (34) and a second guide bar (35), which guide bars (34, 35) are slidable along the first direction (13), and which guide bars (34, 35) are in particular guided through openings at a front end (39, 40) of the supporting platform (4) or through prism or profile tracks in the supporting platform (4), wherein the adjustment slide (33) is linearly extendable relative to the supporting platform (4) along the first direction (13) by means of the guide bars (34, 35).

16. The gripping device (1) according to claim 15, **characterized in that** at least one other transverse slide (36) is configured, on which transverse slide (36) at least one of the retaining means (3) is arranged, and which transverse slide (36) is at least partially received in a transverse guide (15) of the other adjustment slide (33), and which transverse slide (36) is slidable relative to the adjustment slide (33) along the second direction (16) in the transverse guide (15), wherein a guide section (42) of the other adjustment slide (33), which guide section (42) is received in the at least one transverse guide (15), is profiled, in particular hollow-profiled, and wherein this guide section (42) is linearly extendable in the transverse guide (15).

17. The gripping device (1) according to claim 16, **characterized in that** a vacuum pipe (37) is configured parallel to the guide bars (34, 35), which vacuum pipe (37) is linearly extendable relative to the supporting platform (4) and which vacuum pipe (37) is flow-connected to the supply means (27) and to the at least one retaining means (3) arranged on the transverse slide (36) that is arranged on the other adjustment slide (33).

18. The gripping device (1) according to any one of the claims 15 to 17, **characterized in that** the at least one spiral supply line (50) is filled, at least in sections, by at least one of the guide bars (34, 35) of the adjustment slides (9, 10) or that the at least one spiral supply line (50) is arranged between the two guide bars (34, 35).

19. The gripping device (1) according to any one of the preceding claims, **characterized in that** at least one energy chain (51) mounted so as to be movable along the first direction (13) is configured, which energy chain (51) is configured for sliding the adjustment slides (9, 10) and/or for sliding the guide bars (34, 35), and that at least one vacuum line (29) is guided in the energy chain (51).

20. A manipulator, which is configured for receiving a, preferably plate-like, workpiece (2) to be transported, and for releasing it again, comprising a gripping device (1), **characterized in that** the gripping device (1) is configured according to any one of the claims 1 to 19.

## Revendications

1. Dispositif de préhension (1) qui est conçu pour prendre et restituer une pièce à usiner (2) à transporter, de préférence en forme de plaque, comprenant :
- une plateforme de support (4) avec une face inférieure (17), et une face supérieure (41) opposée à la face inférieure (17),
- la plateforme de support (4) étant réalisée sur la face supérieure (41) avec une interface de liaison (5) ou pouvant être couplée avec une interface de liaison (5), laquelle interface de liaison (5) est réalisée pour le couplage du dispositif de préhension (1) avec un manipulateur, et
- la plateforme de support (4) étant réalisée sur la face inférieure (17) avec au moins deux guides de chariot de réglage (11, 12),
- une pluralité de moyens de maintien (3),
- les moyens de maintien (3) étant conçus pour maintenir la pièce à usiner (2),
- les moyens de maintien (3) étant couplés à la plateforme de support (4), et
- les moyens de maintien (3) présentant des faces de contact (7), lesquelles faces de contact (7) sont opposées à la face inférieure (17) de la plateforme de support (4), et lesquelles faces de contact (7) définissent un plan de contact commun (8),
- des moyens d'alimentation (27), lesquels moyens d'alimentation (27) sont conçus pour activer et désactiver les moyens de maintien (3),
- au moins deux chariots de réglage (9, 10),
- lesquels chariots de réglage (9, 10) sont respectivement reçus ou maintenus, au moins partiellement, dans au moins un des guides du chariot de réglage (11, 12), et
- lesquels chariots de réglage (9, 10) peuvent être déplacés dans les guides du chariot de réglage (11, 12) par rapport à la plateforme de support (4) le long d'une première direction (13),
- au moins un des chariots de réglage (9, 10) étant formé avec au moins un guide transversal (15), et
- au moins un chariot transversal (14)
- sur lequel chariot transversal (14) est agencé au moins un des moyens de maintien (3) et
- le chariot transversal (14) étant reçu ou maintenu au moins partiellement dans le guide transversal (15), et
- le chariot transversal (14) pouvant être déplacé dans le guide transversal (15) par rapport au chariot de réglage (9, 10) le long d'une deuxième direction (16),
- la première direction (13) et la deuxième direction (16) étant orthogonales l'une par rapport à l'autre, **caractérisé**
**en ce qu'**une section de guidage (42) de l'au moins un chariot transversal (14), reçue ou maintenue dans l'au moins un guide transversal (15), est profilée, cette section de guidage (42) pouvant être extraite linéairement dans le guide transversal (15).

2. Dispositif de préhension (1) selon la revendication 1, **caractérisé en ce qu'**au moins l'un des chariots de réglage (9, 10) est réalisé avec deux guides transversaux (15) parallèles l'un à l'autre, et **en ce qu'**un chariot transversal (14) extractible est reçu dans chaque guide transversal (15), au moins l'un des moyens de maintien (3) étant disposé sur chaque chariot transversal (14), et les moyens de maintien (3) étant réalisés sur des sections d'extrémité opposées l'une à l'autre des deux chariots transversaux (14).

3. Dispositif de préhension (1) selon l'une des revendications précédentes, **caractérisé en ce que** les chariots de réglage (9, 10) sont réalisés chacun avec un dispositif de fixation du chariot de réglage, lesquels dispositifs de fixation du chariot de réglage peuvent être actionnés indépendamment l'un de l'autre, et lesquels dispositifs de fixation du chariot de réglage sont destinés à la fixation détachable en cas de besoin des chariots de réglage (9, 10) par rapport à la plateforme de support (4) et/ou **en ce que** les chariots de réglage (9, 10) sont réalisés avec un dispositif de fixation du chariot transversal, lequel dispositif de fixation du chariot transversal est réalisé pour la fixation détachable en cas de besoin d'au moins un chariot transversal (14) par rapport au chariot de réglage (9, 10).

4. Dispositif de préhension (1) selon l'une des revendications précédentes, **caractérisé en ce qu'**au moins une première échelle (21) est formée sur la plateforme de support (4) le long de la première direction (13) et/ou **en ce qu'**une deuxième échelle (23) est formée sur au moins un chariot transversal (14) le long de la deuxième direction (16), la première échelle (21) et la deuxième échelle (23) étant de préférence agencées parallèlement au plan de contact (8), de sorte que celles-ci sont visibles lorsque l'on observe la face inférieure (17) de la plateforme de support (4).

5. Dispositif de préhension (1) selon la revendication 3 ou 4, **caractérisé en ce que** le dispositif de fixation du chariot de réglage est réalisé sous la forme d'un dispositif d'encliquetage du chariot de réglage (18), et/ou **en ce que** le dispositif de fixation du chariot transversal est réalisé sous la forme d'un dispositif d'encliquetage du chariot transversal (22), et **en ce que** la plateforme de support (4) est réalisée avec une pluralité d'évidements d'encliquetage disposés à équidistance les uns des autres le long de la première direction (13), et **en ce qu'**un élément d'encliquetage du dispositif d'encliquetage du chariot de réglage (18) peut être mis en prise avec les évidements d'encliquetage de la plateforme de support (4), et **en ce que** le chariot transversal (14) est formé avec une pluralité d'évidements d'encliquetage placés à équidistance les uns des autres le long de la deuxième direction (16) et **en ce qu'**un élément d'encliquetage du dispositif d'encliquetage du chariot transversal (22) peut être mis en prise avec les évidements d'encliquetage du chariot transversal (14).

6. Dispositif de préhension (1) selon la revendication 5, **caractérisé en ce que** l'élément d'encliquetage du dispositif d'encliquetage du chariot de réglage (18) et/ou l'élément d'encliquetage du dispositif d'encliquetage du chariot transversal (22) est réalisé sous forme de boulon (19), lequel boulon (19) peut être mis en prise avec les évidements d'encliquetage de la plateforme de support (4) et/ou avec les évidements d'encliquetage du chariot transversal (14).

7. Dispositif de préhension (1) selon l'une des revendications 3 à 6, **caractérisé en ce que** le dispositif de fixation du chariot de réglage comprend au moins une vis (47), une force de serrage pouvant être appliquée au moyen de la vis (47) entre l'un des chariots de réglage (9, 10) et la plateforme de support (4), et/ou **en ce que** le dispositif de fixation du chariot transversal comprend au moins une vis (47), une force de serrage pouvant être appliquée au moyen de la vis (47) entre ledit au moins un chariot transversal (14) et l'un des chariots de réglage (9, 10).

8. Dispositif de préhension (1) selon l'une des revendications 3 à 7, **caractérisé en ce que** le dispositif de fixation du chariot de réglage comprend au moins un levier de serrage (48), un levier excentrique (49) ou un levier de tension, une force de serrage pouvant être appliquée entre l'un des chariots de réglage (9, 10) au moyen du levier de serrage (48), du levier excentrique (49) ou du levier de tension, et la plate-forme de support (4), et/ou **en ce que** le dispositif de fixation du chariot transversal comprend au moins un levier de serrage (48), un levier excentrique (49) ou un levier de tension, une force de serrage pouvant être appliquée entre l'au moins un chariot transversal (14) et l'un des chariots de réglage (9, 10) au moyen du levier de serrage (48), du levier excentrique (49) ou du levier de tension.

9. Dispositif de préhension (1) selon l'une des revendications 3 à 8, **caractérisé en ce que** le dispositif de fixation du chariot de réglage et/ou le dispositif de fixation du chariot transversal comprend un dispositif de fixation pneumatique (52).

10. Dispositif de préhension (1) selon l'une des revendications précédentes, **caractérisé en ce que** les guides de chariot de réglage (11, 12) sont réalisés sous forme de pistes prismatiques pour l'engagement par complémentarité de forme avec des sections des chariots de réglage (9, 10), en particulier **en ce que** les guides de chariot de réglage (11, 12) sont réalisés sous forme de pistes prismatiques pour l'engagement par complémentarité de forme avec des sections des deux chariots de réglage (9, 10).

11. Dispositif de préhension (1) selon l'une des revendications précédentes, **caractérisé en ce que** la section de guidage (42) de l'au moins un chariot transversal (14) est réalisé au moins par sections avec un profilé creux (45), lequel profilé creux (45) est réalisé sous la forme d'un canal de dépression (30), le canal de dépression (30) étant relié par fluide aux moyens d'alimentation (27) et avec l'au moins un moyen de maintien (3) agencé sur le chariot transversal (14).

12. Dispositif de préhension (1) selon l'une des revendications précédentes, **caractérisé en ce qu'**au moins une ligne d'alimentation (50) en forme de spirale est formée, laquelle au moins une ligne d'alimentation (50) en forme de spirale est prévue pour alimenter au moins l'un des moyens de maintien (3) avec une pression négative.

13. Dispositif de préhension (1) selon la revendication 12, **caractérisé en ce que** l'au moins une ligne d'alimentation (50) en forme de spirale est traversée au moins par sections par la section de guidage (42) de l'au moins un chariot transversal (14).

14. Dispositif de préhension (1) selon l'une des revendications précédentes, **caractérisé en ce que** les moyens d'alimentation (27) comprennent un îlot de vannes (28), lequel îlot de vannes (28) est relié par fluide aux moyens de maintien (3) via des vannes d'arrêt.

15. Dispositif de préhension (1) selon l'une des revendications précédentes, **caractérisé en ce qu'**un autre chariot de réglage (33) est formé, lequel chariot de réglage (33) comprend une première barre de guidage (34) et une deuxième barre de guidage (35), lesquelles barres de guidage (34, 35) peuvent être déplacées le long de la première direction (13), et lesquelles barres de guidage (34, 35) sont guidées, en particulier à travers des ouvertures, sur une face frontale (39, 40) de la plateforme de support (4) ou à travers des pistes prismatiques ou profilées dans la plateforme de support (4), le chariot de réglage (33) pouvant être extrait de manière linéaire par rapport à la plateforme de support (4) le long de la première direction (13) au moyen des barres de guidage (34, 35).

16. Dispositif de préhension (1) selon la revendication 15, **caractérisé en ce qu'**au moins un autre chariot transversal (36) est formé, chariot transversal (36) sur lequel est agencé au moins l'un des moyens de maintien (3), et lequel chariot transversal (36) est reçu au moins partiellement dans un guide transversal (15) de l'autre chariot de réglage (33), et lequel chariot transversal (36) peut être déplacé dans le guide transversal (15) par rapport au chariot de réglage (33) le long de la deuxième direction (16), une section de guidage (42) de l'autre chariot de réglage (33) reçue dans l'au moins un guide transversal (15) étant profilée, en particulier en forme de profil creux, et cette section de guidage (42) pouvant être extraite de manière linéaire dans le guide transversal (15).

17. Dispositif de préhension (1) selon la revendication 16, **caractérisé en ce qu'**un tube à dépression (37) extensible linéairement par rapport à la plateforme de support (4) est formé parallèlement aux barres de guidage (34, 35), lequel tube à dépression (37) est relié par fluide aux moyens d'alimentation (27) et à au moins un moyen de maintien (3) agencé sur l'autre chariot transversal (36) agencé sur le chariot de réglage (33).

18. Dispositif de préhension (1) selon l'une des revendications 15 à 17, **caractérisé en ce que** l'au moins une ligne d'alimentation (50) en forme de spirale est traversée au moins partiellement par au moins une des barres de guidage (34, 35) des chariots de réglage (9, 10) ou **en ce que** l'au moins une ligne d'alimentation (50) en forme de spirale est agencée entre les deux barres de guidage (34, 35).

19. Dispositif de préhension (1) selon l'une des revendications précédentes, **caractérisé en ce qu'**au moins une chaîne énergétique (51) montée mobile le long de la première direction (13) est réalisée, laquelle chaîne énergétique (51) est réalisée pour le déplacement des chariots de réglage (9, 10) et/ou pour le déplacement des barres de guidage (34, 35), et **en ce qu'**au moins une ligne d'alimentation inférieure (29) est guidée dans la chaîne énergétique (51).

20. Manipulateur conçu pour prendre et restituer une pièce à usiner (2) à transporter, de préférence en forme de plaque, comprenant un dispositif de préhension (1), **caractérisé en ce que** le dispositif de préhension (1) est conçu selon l'une des revendications 1 à 19.
